# EUROPÄISCHE PATENTSCHRIFT

(11) **EP 4 047 431 B1**
(45) Veröffentlichungstag und Bekanntmachung des Hinweises auf die Patenterteilung: **19.11.2025**
(21) Anmeldenummer: 21158040.2
(22) Anmeldetag: 19.02.2021
(51) Int. Cl.: G05B 19/418

(54) **VERFAHREN UND VORRICHTUNG ZUM AUTOMATISIERTEN BESTIMMEN EINER OPTIMIERTEN PROZESSKONFIGURATION EINES PROZESSES ZUR HERSTELLUNG ODER BEARBEITUNG VON PRODUKTEN**
METHOD AND DEVICE FOR AUTOMATICALLY DETERMINING AN OPTIMIZED PROCESS CONFIGURATION OF A PROCESS FOR PRODUCING OR PROCESSING PRODUCTS
PROCÉDÉ ET DISPOSITIF DE DÉTERMINATION AUTOMATIQUE D'UNE CONFIGURATION OPTIMISÉE DE PROCESSUS D'UN PROCESSUS DE FABRICATION OU DE TRAITEMENT DES PRODUITS

(43) Veröffentlichungstag der Anmeldung: 24.08.2022
(73) Patentinhaber: FactoryPal GmbH, 13355 Berlin (DE)
(72) Erfinder: Kronenbitter, Bastian Tiemo, 76646 Bruchsal (DE); Breyel, David, 76669 Bad Schönborn (DE); Chorev Metger, Edith, 10785 Berlin (DE)
(74) Vertreter: Platzöder Patentanwaltsgesellschaft mbH

(56) Entgegenhaltungen:
- US-A1- 2005 159 922
- US-A1- 2006 095 484
- US-A1- 2007 005 525
- US-A1- 2020 110 385

## Beschreibung

Die vorliegende Erfindung liegt insbesondere auf dem technischen Gebiet der Prozessautomatisierung und betrifft ein, insbesondere computerimplementiertes, Verfahren zum automatisierten Bestimmen einer optimierten Prozesskonfiguration eines mittels einer technischen Anlage ausführbaren und mittels verschiedener Prozesskonfigurationsparameter konfigurierbaren Prozesses zur Herstellung oder Bearbeitung von Produkten. Sie betrifft des Weiteren ein Anlagensteuerungssystem, das konfiguriert ist, einen zur Ausführung auf einer technischen Anlage ablauffähigen Prozess zur Herstellung oder Bearbeitung von Produkten nach dem genannten Verfahren gemäß der optimierten Prozesskonfiguration zu konfigurieren bzw. zu steuern, sowie ein zur Ausführung des Verfahrens auf dem Anlagensteuerungssystem konfiguriertes Computerprogramm.

Im Rahmen der modernen industriellen Produktion und Bearbeitung (insbesondere Veredelung oder Prüfung) von Produkten kommen oftmals sehr komplexe technische Anlagen zum Einsatz, die in vielen Fällen aus einer Mehrzahl von einzelnen oder miteinander kombinierten Geräten und Bearbeitungsstationen (insbesondere Maschinen) aufgebaut sind, und auf denen entsprechend ein oder mehrere verschiedene komplexe und jeweils in vielerlei Hinsicht konfigurierbare Herstellungs- oder Arbeitsverfahren (Prozesse) ablaufen können. Als einige Beispiele aus der Vielzahl von Möglichkeiten seien hier nur Fertigungsstraßen (Linien) zur Papierherstellung oder zur Herstellung von nicht-elektronischen Consumer-Produkten oder Teilen davon, wie etwa von Kosmetikprodukten und deren Verpackungsmaterial, oder Prozesse zur Herstellung von chemischen Stoffen, insbesondere von Pharmaprodukten, zu nennen. Um die Möglichkeit zu eröffnen, dass auf ein und derselben Anlage verschiedenste Produkte oder Produktvarianten gefertigt bzw. bearbeitet werden können, sind solche technischen Anlagen und damit auch die darauf ablaufenden Prozesse in aller Regel mittels einer Vielzahl verschiedener einstellbarer Parameter konfigurierbar.

Bezüglich eines solchen Prozesses werden im Folgenden diese einstellbaren Parameter zur Konfiguration des Prozesses jeweils einzeln bzw. als Mehrzahl als "Prozesskonfigurationsparameter" und ihre Gesamtheit zudem als "Prozesskonfiguration" bezeichnet. Regelmäßig gilt dabei, dass sich die Prozesskonfigurationsparameter bzw. die Prozesskonfiguration als Ganzes aus einer entsprechenden Anlagenkonfiguration der zur Ausführung des Prozesses vorgesehenen Anlage mittels zugehörigen Anlagenkonfigurationsparametern ergeben. Die Prozesskonfigurationsparameter können somit regelmäßig, insbesondere im Rahmen einer funktionsartigen Zuordnung, einem oder mehreren der Anlagenkonfigurationsparameter zugeordnet werden oder damit identisch sein.

Im Hinblick auf das Ziel einer möglichst hohen Effektivität und/oder Effizienz eines solcher Prozesses zur Herstellung oder Bearbeitung von Produkten ist es regelmäßig erforderlich, die entsprechende technische Anlage bzw. den darauf ablaufenden Prozess zu optimieren, was insbesondere bedeutet, eine optimierte Prozesskonfiguration zu finden. Dies kann zum einen statisch im Sinne des Bestimmens einer optimierten Anfangskonfiguration, die während der Dauer des Prozesses unverändert aufrechterhalten wird, erfolgen. In vielen Fällen besteht jedoch die Problematik, dass sich verschiedene Einflussgrößen auf den Prozess während seines Ablaufs verändern können, beispielsweise durch Temperaturschwankungen, Abnutzungserscheinungen an der Anlage oder zeitabhängige Veränderungen an den Ausgangsprodukten. In solchen Fällen ist daher eine dynamische Optimierung wünschenswert, mittels der Wert des Prozessablaufs selbst eine wiederholte, insbesondere fortlaufende Prozessoptimierung mittels entsprechender Anpassung der Prozesskonfiguration erfolgt.

Zu den bekannten Maßnahmen zur Produktionsoptimierung gehören insbesondere der Einsatz von Planungssoftware bei der mittels eines Algorithmus eine Optimierung der Produktionsplanung, insbesondere ein Effizienzmaximum im Hinblick auf eine optimale Reihenfolge der Produktionsaufträge, gesucht wird, um Umrisszeiten zu reduzieren. Auch kommt regelmäßig eine Visualisierung von Produktionsprozessen in Echtzeit zum Einsatz, was hauptsächlich dazu dient, Transparenz bezüglich der Datenpunkte des Produktionsprozesses herzustellen.

Zur Erkennung von Anomalien beim Prozessablauf und zum Zwecke einer vorausschauenden Instandhaltung (engl. "Predictive Maintenance") können Algorithmen zum Einsatz kommen, um solche Anomalien frühzeitig zu erkennen und das mit dem Betrieb der Anlage betraute Personal entsprechend zu benachrichtigen oder auf Basis eines Vergleichs des ist Betriebs der Anlage mit historischen Betriebsdaten voraussichtliche zukünftige Anlagenausfälle und Wartungsintervalle besser vorhersagen zu können.

In der Prozessoptimierung ist aufgrund der meist mehrdimensionalen Abhängigkeiten zwischen allen Prozess- bzw. Anlagenkonfigurationsparametern in der Anlage (z.B. Fertigungslinie) das Bestimmen einer optimalen Prozess- bzw. Anlagenkonfiguration äußerst schwierig und oft unmöglich. Bislang beruht die Optimierung von Prozesskonfigurationen beziehungsweise entsprechenden Anlageneinstellungen (z.B. Maschinenparametern) im Wesentlichen auf verschiedenen Ansätzen, bei denen allesamt eine Experimentalphase der eigentlichen Produktion vorausgehen muss, während der verschiedenen Variationen von Prozesskonfigurationen und Ausgangsmaterialien getestet werden, um einen ausreichend gute Prozesskonfiguration zu finden.

In der kontinuierlichen Fertigung laufen komplexe Anlagen, insbesondere Anlagen mit Dutzenden oder gar Hunderten Konfigurationsparametern, oft nach Herstellerrichtlinien, die den aktuellen Zustand der Anlage und die Besonderheiten des hergestellten Produkts nicht berücksichtigen. Da es zudem keine guten Simulatoren für solche komplexen Anlagen gibt, betreiben die Bediener die Linien zumindest teilweise auf Basis manueller Prozesskonfigurationen auf der Grundlage von Intuition und Erfahrung, was zu enormen Unterschieden in der Fertigungsqualität zwischen den Personen führt, die die Linie betreiben.

Im Rahmen der Produktionsoptimierung werden mit dem Begriff "Centerlining" (bzw. "Mittellinienfindung") Methoden bezeichnet, die mit denen vor allem das Ziel einer Verringerung der Prozessvariabilität und der Erhöhung der Anlageneffizienz bei der Herstellung oder Bearbeitung von Produkten verfolgt wird. Um zu messen, wie gut ein solches Centerlining für einen gegebenen Prozess tatsächlich erreicht wurde, werden oftmals als Leistungskennzahlen (engl. "Key Performance Indicator", KPI) die sogenannte Prozessfähigkeit, etwa anhand zumindest eines Prozessfähigkeitsindizes, oder die Gesamtanlageneffektivität (GAE bzw. engl. "Overall Equipment Effectiveness ", OEE) verwendet. Die Gesamtanlageneffektivität GAE ist ein Maß für die Wertschöpfung einer Anlage. Mit ihr können auf einen Blick sowohl ihre Produktivität als auch deren Verluste dargestellt werden. Sie ist als Produkt der folgenden Faktoren definiert: Verfügbarkeitsfaktor, Leistungsfaktor, Qualitätsfaktor und ihr Wertebereich ist in der Regel so festgelegt, dass er zwischen 0 und 1 bzw. zwischen 0 % und 100 % liegt.

US 2005/0159922 beschreibt ein Überwachungssystem mit: einer Vielzahl von Vorrichtungen; einem Empfangsmodul, das mit der Vielzahl von Vorrichtungen gekoppelt ist, um Eingänge von den Vorrichtungen zu empfangen; einem Verarbeitungsmodul, das mit dem Empfangsmodul gekoppelt ist, um eine Analyse der Vorrichtungseingänge zu erzeugen; dadurch gekennzeichnet, dass das Verarbeitungsmodul umfasst: ein Speichermodul zum Speichern von Modellen eines Phänomens, ein Anwendungsmodul zum Anwenden des Modells auf die Vorrichtungseingänge; ein Diagnosemodul zur Erzeugung eines Deskriptors eines Zustands des Phänomens unter Verwendung des Speichermoduls und des Anwendungsmoduls, wobei das Diagnosemodul einen ersten Deskriptor unter Verwendung eines ersten Modells und einen zweiten Deskriptor unter Verwendung eines zweiten Modells erzeugt, und wobei der Deskriptor des Zustands des Phänomens auf Grundlage des ersten Deskriptors und des zweiten Deskriptors erzeugt wird; ein Benachrichtigungsmodul, das mit dem Verarbeitungsmodul gekoppelt ist, um einen Ausgang unter Verwendung der Analyse zu erzeugen und eine Lieferung des Ausgangs zu managen; ein Kommunikationsmodul, das mit dem Benachrichtigungsmodul gekoppelt ist, um den Ausgang zu liefern.

US 2006/095484 A1 beschreibt ein Verfahren und ein System zur Lösung eines Optimierungsproblems unter einer Reihe von Beschränkungen. Ein Satz von Lösungen wird unter dem Satz von Beschränkungen bewertet. Anfängliche Verletzungsmetriken und -zustände werden auf der Grundlage von mindestens einer Nebenbedingung erzeugt, die den Lösungen entspricht, die die Nebenbedingungen verletzen. Aus der vorhandenen Menge von Lösungen wird durch eine Reihe von Operatoren eine Menge von Lösungsvorschlägen erzeugt. Die Menge der Lösungsvorschläge wird inkrementell und unabhängig von den Operatoren und der Bedingung bewertet. Wird eine bewertete Lösung akzeptiert, werden die Verletzungsmetriken und Zustände auf der Grundlage der akzeptierten Lösung aktualisiert. Wird die evaluierte Lösung jedoch nicht akzeptiert, wird ein nächster Lösungskandidat inkrementell evaluiert. Dieser Prozess wird so lange wiederholt, bis alle Lösungsvorschläge nicht mehr akzeptiert werden. Schließlich wird das Verfahren beendet, wenn ein Haltekriterium erfüllt ist.

US 2020/110385 A1 beschreibt eine Vorrichtung und ein Verfahren zum Bestimmen einer Ziel-Einstellroute für einen voreingestellten Kontrollbedingungssatz einer Produktionslinie. Die Vorrichtung erstellt mindestens einen Einstellungskandidaten für den voreingestellten Steuerbedingungssatz gemäß den historischen Steuerbedingungssätze. Jeder Einstellungskandidat enthält mindestens einen Einstellungskontrollbedingungssatz, der in einer Einstellreihenfolge angeordnet ist. Jeder Einstellungskontrollbedingungssatz ist einer der historischen Kontrollbedingungssätze. Innerhalb desselben Einstellungskandidaten sind die historischen ertragsbezogenen Werte, die den Einstellungskontrollbedingungssätzen entsprechen, alle größer als der voreingestellte ertragsbezogene Wert und steigen in der Einstellreihenfolge an. Innerhalb desselben Einstellungskandidaten nimmt die Anzahl der in den Einstellungssätzen enthaltenen Einstellungskontrollbedingungen in der Einstellreihenfolge zu. Das Gerät wählt eine der infrage kommenden Anpassungsrouten als Zielanpassungsroute aus.

US 2007/005525 A1 beschreibt ein System und ein Verfahren zur Steuerung eines Prozesses mit räumlich abhängigen Bedingungen zur Herstellung eines Produkts mit räumlich abhängigen Eigenschaften, z.B. eines bahn- oder blattbasierten Prozesses zur Herstellung eines Bahn- oder Blatt-basierten Produkts. Eingabedaten, die eine Vielzahl von Eingabedatensätzen umfassen, werden einem neuronalen Netz (analog oder computergestützt) zur Verfügung gestellt, wobei jeder Datensatz Werte für einen oder mehrere Eingabeparameter enthält, die jeweils eine entsprechende Prozessbedingung oder Produkteigenschaft betreffen. In den Eingabedaten sind die räumlichen Beziehungen der Eingabedaten erhalten. Das neuronale Netz erzeugt Ausgabedaten von den Eingabedaten abhängige Ausgabedaten, wobei die Ausgabedaten eine Vielzahl von Ausgabedatensätzen umfassen, die jeweils Werte für einen oder mehrere Ausgabeparameter enthalten, die jeweils eine vorhergesagte Prozessbedingung oder Produkteigenschaft umfassen. Die Ausgabedaten bewahren räumliche Beziehungen der Ausgabedaten, die den räumlichen Beziehungen der Eingabedaten entsprechen. Die Ausgabedaten können von einer Steuerung oder einem Bediener zur Steuerung des Prozesses verwendet werden.

Der vorliegenden Erfindung liegt die Aufgabe zugrunde, das automatisierte Bestimmen einer optimierten Prozesskonfiguration, insbesondere im Sinne eines Centerlining, eines mittels einer technischen Anlage ausführbaren und mittels verschiedener, insbesondere sehr vieler, Prozesskonfigurationsparameter konfigurierbaren Prozesses zur Herstellung oder Bearbeitung von Produkten weiter zu verbessern.

Die Lösung dieser Aufgabe wird gemäß der Lehre der unabhängigen Ansprüche erreicht. Verschiedene Ausführungsformen und Weiterbildungen der Erfindung sind Gegenstand der Unteransprüche.

Ein erster Aspekt der Erfindung betrifft ein, insbesondere computerimplementiertes, Verfahren zum automatisierten Bestimmen einer, insbesondere im Sinne eines Centerlining, optimierten Prozesskonfiguration eines mittels einer technischen Anlage ausführbaren und mittels einer Anzahl M>1 verschiedener Prozesskonfigurationsparameter konfigurierbaren Prozesses zur Herstellung oder Bearbeitung von Produkten, wobei das Verfahren aufweist:
(i) Erfassen von historischen Prozesskonfigurationsdaten, die für eine Mehrzahl von verschiedenen gegenwärtigen oder vergangenen Zeitpunkten oder Zeiträumen während zumindest einer Ausführung des Prozesses die dabei jeweils genutzte tatsächliche Prozesskonfiguration des Prozesses anhand von diese jeweilige Prozesskonfiguration definierenden Ist-Werten der Prozesskonfigurationsparameter, insbesondere von Maschineneinstellungen der Anlage, repräsentieren;
(ii) Erfassen von Zustandsdaten, insbesondere Maschinen- und/oder Sensordaten, die für jeden der gegenwärtigen oder vergangenen Zeitpunkte bzw. Zeiträume jeweils einen zugehörigen jeweiligen tatsächlichen Ist-Betriebszustand der Anlage mittels jeweiliger Ist-Werte einer Anzahl N>1 von verschiedenen Zustandsparametern der Anlage repräsentieren;
(iii) Erfassen von Produktionsdaten, die zumindest eine durch den Prozess beeinflussbare Soll-Eigenschaft der aus dem Prozess resultierenden Produkte oder zumindest eine Ist- oder Soll-Eigenschaft zumindest eines dazu eingesetzten Ausgangsstoffes oder Ausgangsprodukts repräsentieren;
(iv) Bestimmen, insbesondere Berechnen, einer im Hinblick auf eine definierte Metrik hin optimierten und durch jeweilige Soll-Werte der Prozesskonfigurationsparameter definierten Prozesskonfiguration des Prozesses (unmittelbar oder mittelbar über eine entsprechende Anlagenkonfiguration der zur Ausführung des Prozesses vorgesehenen Anlage) unter Verwendung eines an den Prozess angepassten und dabei zumindest teilweise auf maschinellem Lernen beruhenden Optimierungsverfahrens unter Verwendung von Inputdaten, welche die Produktionsdaten sowie von durch die historischen Prozesskonfigurationsdaten und die Zustandsdaten gegebenen oder daraus abgeleiteten Merkmalen umfassen; und
(v) Ausgeben von Soll-Prozesskonfigurationsdaten, welche die bestimmte, insbesondere berechnete, optimierte Prozesskonfiguration mittels der Soll-Werte der Prozesskonfigurationsparameter repräsentieren.

Das Verfahren weist des Weiteren zumindest einen der folgenden, insbesondere dynamisch während des Prozessablaufs ausgeführten, Schritte auf:
(vi) Automatisches Einstellen der Anlage mit den ausgegebenen Soll-Prozesskonfigurationsdaten, um die Anlage zu konfigurieren, den Prozess gemäß der optimierten Prozesskonfiguration ausführen zu können;
(vii) Automatisches Steuern der Anlage zur Ausführung des Prozesses gemäß der durch die ausgegebenen Soll-Prozesskonfigurationsdaten definierten optimierten Prozesskonfiguration. Somit lässt sich eine automatische Konfiguration bzw. Steuerung der Anlage auf Basis der, insbesondere dynamisch, aufgefundenen optimierten Prozesskonfiguration erreichen.

Unter dem Begriff "Metrik" im Sinne der Erfindung ist insbesondere ein quantifizierbares Bewertungskriterium zu verstehen, dass die Leistungsfähigkeit eines Prozesses, insbesondere im Hinblick auf dessen Effizienz oder Effektivität, kennzeichnet. Eine Metrik kann dabei insbesondere mittels einer ein- oder mehrwertigen (z.B. skalaren oder vektoriellen) mathematischen Zielfunktion auf Basis der Prozesskonfigurationsparameter (insbesondere als Bestandteile oder Variablen) definiert sein. Eine Metrik kann insbesondere durch oder auf Basis einer oder mehreren Leistungskennzahlen (KPI) für den Prozess selbst und/oder dessen Prozessergebnisse definiert werden. Die Metrik kann sich insbesondere auf eine Durchsatzrate und/oder Produktionskapazität oder Ausfallzeit des Prozesses bzw. der Anlage oder auf ein Qualitätsmaß bzgl. der aus dem Prozess resultierenden Produkte beziehen.

Die Metrik ist oder wird hierin speziell so definiert, dass sie eines der folgenden Optimierungsziele für den Prozess oder eine bestimmte, insbesondere Boolesche, Kombination von zwei oder mehr dieser Optimierungsziele quantifiziert: (i) Verringerung, insbesondere Minimierung, der Prozessvariabilität des Prozesses, insbesondere um einen optimalen Prozessverlauf zu erreichen; (ii) Verringerung, insbesondere Minimierung, der Produktvariabilität der aus der Durchführung des Prozesses resultierenden Produkte insbesondere um eine optimale Produktqualität zu erreichen; (iii) Erhöhung, insbesondere Maximierung, der Effizienz und/oder Effektivität, insbesondere der Gesamtanlageneffektivität (OEE), des Prozesses, wobei die Erhöhung der Effizienz und/oder Effektivität des Prozesses eine der folgenden Größen oder eine Kombination aus zumindest zwei solcher Größen angibt: eine Durchsatzrate des Prozesses; eine Verfügbarkeit des Prozesses; eine Quantität der hergestellten oder bearbeiteten Produkte; eine Qualität der hergestellten oder bearbeiteten Produkte. Zumindest eines, vorzugsweise sämtliche, dieser Optimierungsziele kann bzw. können mittels entsprechender Leistungskennzahlen (KPI) definiert sein. Eine Metrik der vorgenannten Art ist somit insbesondere im Hinblick auf ein angestrebtes Centerlining eines auf der Anlage ausführbaren Prozesses einsetzbar.

Unter dem Begriff "Erfassen" von Daten, insbesondere von historischen Prozesskonfigurationsdaten und/oder Zustandsdaten und/oder Produktionsdaten, ist im Sinne der Erfindung insbesondere das Einlesen oder Empfangen solcher Daten, etwa in maschinenlesbarer Form über eine Datenschnittstelle oder über eine Mensch-Maschine-Schnittstelle, oder das sensorische Erfassen solche Daten mittels einer geeigneten Sensorik mit einem oder mehreren Sensoren in Form entsprechender Sensordaten zu verstehen.

Unter einer einem "Ist-Wert" eines Parameters ist im Sinne der Erfindung insbesondere der jeweilige Wert des Parameters zu verstehen, den dieser für den zugeordneten gegenwärtigen oder früheren Zeitpunkt bzw. Zeitraum hat bzw. hatte. Ein "Ist-Wert" muss sich somit nicht zwingender Weise auf einen aktuellen zum gegenwärtigen Zeitpunkt vorliegenden Wert des Parameters beziehen, sondern kann sich gegebenenfalls auch auf einen zugeordneten früheren Zeitpunkt oder Zeitraum beziehen.

Unter dem Begriff "Merkmal" ist im Sinne der Erfindung, entsprechend der auf dem Gebiet des maschinellen Lernens und der Mustererkennung üblichen Nomenklatur, insbesondere eine einzelne messbare Eigenschaft oder Charakteristik eines zu beobachtenden Phänomens zu verstehen. Merkmale können insbesondere so definiert sein, dass ihnen jeweils ein numerischer Wert zugewiesen werden kann, der das Merkmal quantifiziert.

Unter dem Begriff "Ausgeben" von Daten, insbesondere von Soll-Prozesskonfigurationsdaten, ist im Sinne der Erfindung insbesondere ein Bereitstellen der Daten in maschinenlesbarer Form (etwa an einer Datenschnittstelle oder in Form einer oder mehreren Dateien oder Datenströme) oder in menschenlesbarer Form an einer oder mehreren Mensch-Maschine-Schnittstellen (MMI) (etwa an einem Monitor) zu verstehen.

Unter dem Begriff "optimieren" oder "optimierte" (und jeweiligen Abwandlungen davon) ist im Sinne der Erfindung eine Verbesserung im Hinblick auf zumindest ein angestrebtes Optimierungsziel zu verstehen. Dies schließt, ohne jedoch darauf beschränkt zu sein, die Möglichkeit ein, dass ein optimiertes Ergebnis, insbesondere eine optimierte Prozesskonfiguration, tatsächlich die im Hinblick auf das bzw. die Optimierungsziele bestmögliche Ergebnis ist.

Die hierein gegebenenfalls verwendeten Begriffe "umfasst", "beinhaltet", "schließt ein", "weist auf", "hat", "mit", oder jede andere Variante davon sollen eine nicht ausschließliche Einbeziehung abdecken. So ist beispielsweise ein Verfahren oder eine Vorrichtung, die eine Liste von Elementen umfasst oder aufweist, nicht notwendigerweise auf diese Elemente beschränkt, sondern kann andere Elemente einschließen, die nicht ausdrücklich aufgeführt sind oder die einem solchen Verfahren oder einer solchen Vorrichtung inhärent sind.

Ferner bezieht sich "oder", sofern nicht ausdrücklich das Gegenteil angegeben ist, auf ein inklusives "oder" und nicht auf ein exklusives "oder". Zum Beispiel wird eine Bedingung A oder B durch eine der folgenden Bedingungen erfüllt: A ist wahr (oder vorhanden) und B ist falsch (oder nicht vorhanden), A ist falsch (oder nicht vorhanden) und B ist wahr (oder vorhanden), und sowohl A als auch B sind wahr (oder vorhanden).

Die Begriffe "ein" oder "eine", wie sie hier verwendet werden, sind im Sinne von "ein/eine oder mehrere" definiert. Die Begriffe "ein anderer" und "ein weiterer" sowie jede andere Variante davon sind im Sinne von "zumindest ein Weiterer" zu verstehen.

Der Begriff "Mehrzahl", wie er hier verwendet wird, ist im Sinne von "zwei oder mehr" zu verstehen.

Unter dem Begriff "konfiguriert" oder "eingerichtet" eine bestimmte Funktion zu erfüllen, (und jeweiligen Abwandlungen davon) ist im Sinne der Erfindung zu verstehen, dass die entsprechende Vorrichtung bereits in einer Ausgestaltung oder Einstellung vorliegt, in der sie die Funktion ausführen kann oder sie zumindest so einstellbar - d.h. konfigurierbar - ist, dass sie nach entsprechender Einstellung die Funktion ausführen kann. Die Konfiguration kann dabei beispielsweise über eine entsprechende Einstellung von Parametern eines Prozessablaufs oder von Schaltern oder ähnlichem zur Aktivierung bzw. Deaktivierung von Funktionalitäten bzw. Einstellungen erfolgen. Insbesondere kann die Vorrichtung mehrere vorbestimmte Konfigurationen oder Betriebsmodi aufweisen, sodass das Konfigurieren mittels einer Auswahl einer dieser Konfigurationen bzw. Betriebsmodi erfolgen kann.

Bei dem vorgenannten Verfahren nach dem ersten Aspekt beruhen die Input-Daten bzw. die dadurch repräsentierten Merkmale, sowohl auf den historischen Prozesskonfigurationsdaten als auch auf den Zustandsdaten und den Produktionsdaten. Damit ist es möglich, im Rahmen des maschinenlernen-basierten Optimierungsvorgangs die komplexen und oft vorab nicht im Einzelnen bekannten Zusammenhänge und gegenseitigen und oft mehrdimensionalen Abhängigkeiten zwischen diesen verschiedenen Datenarten bzw. Merkmalen zu berücksichtigen und in einem ganzheitlichen Ansatz gemeinsam zu behandeln und somit insgesamt optimierte Ergebnisse für die aufzufindende optimierte Soll-Prozesskonfiguration zu erhalten, und das insbesondere anlagen- und produktspezifisch. Insbesondere können so verschiedenste Prozessziele zugleich bzw. bei gegenseitiger Abhängigkeit in Kombination optimiert werden, etwa Prozessziele die einerseits auf eine hohe Prozessgeschwindigkeit (z.B. Durchsatz oder geringe Ausfallzeiten) und andererseits auch auf eine hohe Qualität der resultierenden Produkte abzielen.

Der Einsatz eines maschinenlernen-basierten Optimierungsverfahrens ermöglicht es zudem, auf eine experimentelle Phase zur Prozessoptimierung vor dem eigentlichen operativen bzw. produktiven Einsatz des Prozesses zu verzichten und es kann eine sehr große Anzahl M >> 1 von Prozesskonfigurationsparametern im Rahmen der Optimierung berücksichtigt werden, die mit herkömmlichen Methoden der Prozessoptimierung typischerweise nicht oder nur mit sehr viel höherem Aufwand möglich wäre. Zudem erlaubt das Verfahren neben der Prozessoptimierung auch die Simulation und Voraussage der Prozessleistungsfähigkeit in Abhängigkeit von verschiedenen Prozesskonfigurationen sowie die entsprechende Prozesstransparenz, etwa bzgl. der Prozesskonfiguration und der resultierenden Werte der Metrik.

Nachfolgend werden bevorzugte Ausführungsformen des Verfahrens nach dem ersten Aspekt beschrieben, die jeweils, soweit dies nicht ausdrücklich ausgeschlossen wird oder technisch unmöglich ist, beliebig miteinander sowie mit den weiteren beschriebenen anderen Aspekten der Erfindung kombiniert werden können.

Bei einigen Ausführungsformen sind die Input-Daten, zumindest teilweise, zeitabhängig und das Verfahren wird während einer Ausführung des Prozesses wiederholt, insbesondere fortlaufend, durchgeführt, um dynamisch auf Basis der Input-Daten Soll-Prozesskonfigurationsdaten zu bestimmen und auszugeben. Damit erfolgt hier eine dynamische Prozessoptimierung während des operativen Ablaufs des Prozesses, so dass insbesondere auf währenddessen auftretende Schwankungen, etwa von Eigenschaften der Ausgangsstoffe oder Zwischenprodukte, von Umgebungsparametern (z.B. Temperatur, Luftdruck, Luftfeuchtigkeit o.ä.) oder von Anlagenzuständen (z.B. Schwankungen von Maschinengeschwindigkeiten oder Toleranzen usw.) zeitnah, insbesondere sofort, durch eine entsprechende Anpassung der Prozesskonfiguration reagiert werden kann.

Bei einigen Ausführungsformen weist das Ausgeben der Soll-Prozesskonfigurationsdaten zumindest einen der folgenden Schritte auf: (i) Bereitstellen der Soll-Prozesskonfigurationsdaten an einer Datenschnittstelle der Anlage, insbesondere in Form einer oder mehrere Dateien oder Datenströme; (ii) Übermitteln der Soll-Prozesskonfigurationsdaten über eine Kommunikationsstrecke, insbesondere Funkstrecke, an einen entfernten Datenempfänger, insbesondere an eine Funktionseinheit zur Steuerung oder Überwachung der Anlage oder von Teilen davon; (iii) Ausgeben oder Veranlassen eines Ausgebens der Soll-Prozesskonfigurationsdaten in menschenlesbarer Form an einer Mensch-Maschine-Schnittstelle, MMI, insbesondere eines entfernten Datenempfängers, bei dem es sich jeweils insbesondere um ein mobiles Endgerät, etwa für ein Bedien- oder Überwachungspersonal der Anlage, handeln kann. Die MMI kann sich jedoch stattdessen oder zusätzlich auch in der Nähe, insbesondere unmittelbar an der Anlage, etwa als Bestandteil derselben befinden. Das Bereitstellen der Soll-Prozesskonfigurationsdaten gemäß zumindest einer der verschiedenen Optionen (i) bis (iii) kann insbesondere dazu genutzt werden, die über die Datenschnittstelle gelieferten Daten für eine Gesamtoptimierung einer übergeordneten Produktionseinheit, wie etwa einer gesamten Fabrik oder eines Verbundes mehrere Fertigungslinien zur Verfügung zu stellen. Speziell die Optionen (ii) und (iii) ermöglichen es zudem, auch aus der Distanz die Anlage zu überwachen bzw. zu steuern, insbesondere zum Zwecke einer dynamischen Prozessoptimierung.

Bei einigen Ausführungsformen sind oder werden die Zustandsparameter so ausgewählt, dass sie einzeln oder kumulativ einen oder mehrere der folgenden tatsächlichen Ist-Betriebszustände der Anlage für den zumindest einen gegenwärtigen oder früheren Zeitpunkt bzw. Zeitraum repräsentieren:
- Durchsatzrate oder Quantität, insbesondere Mindestdurchsatzrate bzw. -qualität, der hergestellten oder bearbeiteten Produkte, insbesondere auf die gesamte Anlage bzw. den gesamten Prozess oder auf einen oder mehrere einzelne Anlagenabschnitte bzw. Prozessabschnitte bezogen;
- Fehlerrate, Fehlerquantität oder Fehlerart von beim Prozessablauf aufgetretenen Fehlern, insbesondere ausweislich von aufgetretenen Fehler- oder Alarmmeldungen Fehlerrate, Fehlerquantität oder Fehlerart von beim Prozessablauf aufgetretenen Fehlern, insbesondere ausweislich von aufgetretenen Fehler- oder Alarmmeldungen oder Quantitäten oder Mengen von fehlerhaften Produkten aus dem Prozess;
- Jeweilige Betriebsgeschwindigkeit, insbesondere maximale aufgetretene Betriebsgeschwindigkeit, zumindest eines beweglichen Teils der Anlage;
- Eine oder mehrere Durchsatzverlustzeiten oder Zeitpunkte oder Zeitdauern, an den bzw. während derer eine reduzierte Leistungsfähigkeit oder ein Stillstand, insbesondere ein Ausfall, der Anlage aufgetreten ist;
- Informationen oder Kennungen von Gründen die zu einer reduzierten Leistungsfähigkeit oder zu einem Stillstand der Anlage führten.
- Zeitpunkte, insbesondere Ist-Zeitpunkte oder geplante Zeitpunkte, für den Start oder ein Ende des Prozessbetriebs
- Datentypen oder Formate der Input-Daten oder ausgegebenen Daten, insbesondere zur Darstellung der Soll-Prozesskonfigurationsparameter.

Bei einigen Ausführungsformen sind oder werden die historischen Prozesskonfigurationsdaten so ausgewählt, dass sie einzeln oder kumulativ eine oder mehrere der folgenden Konfigurationsmöglichkeiten der Anlage für den zumindest einen gegenwärtigen oder früheren Zeitpunkt bzw. Zeitraum repräsentieren: Eine oder mehrere Einstellungen, insbesondere Maschineneinstellungen oder Soll-Betriebszustände, wie etwa Soll-Werte für Steuerungs- oder Regelgrößen, der Anlage.

Bei einigen Ausführungsformen sind oder werden die Produktionsdaten so festgelegt, dass sie eine oder mehrere der folgenden Soll-Eigenschaften der aus dem Prozess zu erhaltenden Produkte oder zumindest eines dazu eingesetzten Ausgangsstoffes oder Ausgangsprodukts repräsentieren:
- Art, Typ, Qualität oder ausgewählte physikalische oder chemische Eigenschaften der eingesetzte Ausgangsstoffe oder Ausgangsprodukte;
- Form oder Art der Bereitstellung der eingesetzten Ausgangsstoffe oder Ausgangsprodukte;
- Art, Typ, Qualität oder ausgewählte physikalische oder chemische Soll-Eigenschaften der aus dem Prozess zu erhaltenden Produkte;
- Form oder Art der Bereitstellung der aus dem Prozess zu erhaltenden Produkte.

Bei einigen Ausführungsformen sind oder werden die Anzahl M der Prozesskonfigurationsparameter und die Anzahl N der Zustandsparameter so gewählt, dass N+M ≥ 10, insbesondere N+M ≥ 30, speziell insbesondere N+M ≥ 100, gilt. Somit können insbesondere sehr komplexe Prozesse oder Anlagenkonfigurationen eingesetzt werden, die mit herkömmlichen Mitteln der Prozessoptimierung in der Regel nicht mehr oder nur mit sehr viel höherem Aufwand beherrschbar, insbesondere effektiv und schnell, insbesondere in oder nahezu in Echtzeit, optimierbar wären.

Bei einigen Ausführungsformen werden die Zustandsdaten, die historischen Prozesskonfigurationsdaten und/oder die Soll-Konfigurationsdaten, insbesondere fortlaufend, gespeichert und zu einem demgegenüber späteren Zeitpunkt gelesen und als Zustandsdaten bzw. historische Prozesskonfigurationsdaten im Rahmen einer iterativen Durchführung des Verfahrens genutzt. Das Speichern kann insbesondere in eine Cloud-Umgebung erfolgen, so dass ein ortsunabhängiger Fern-Zugriff auf die Daten erleichtert oder erst ermöglicht wird. Die kann insbesondere auch dazu genutzt werden, Daten zwischen verschiedenen Anlagen bzw. Fertigungslinien auszutauschen, um so mittels einer Anlage gewonnene Daten auch anderen Anlagen für deren Betrieb oder Prozessoptimierung zur Verfügung zu stellen.

Bei einigen Ausführungsformen weist das Optimierungsverfahren auf: (i) Mehrfaches Berechnen einer im Hinblick auf die Metrik hin optimierten und dabei mittels eines jeweiligen zu bestimmenden Satzes von vorläufigen Soll-Prozesskonfigurationsparametern repräsentierten Prozesskonfiguration des Prozesses (insbesondere der Anlage), wobei jedes Berechnen mittels eines jeweiligen Berechnungsverfahrens aus einem Ensemble von mehreren zueinander alternativen Berechnungsverfahren und jeweils unter Verwendung von Merkmalen aus den Input-Daten erfolgt, und wobei zumindest eines der Berechnungsverfahren des Ensembles unter Verwendung von maschinellem Lernen an den Prozess angepasst ist oder wird; und (ii) Festlegen der Soll-Prozesskonfigurationsparameter auf Basis eines ausgewählten Satzes aus der Menge der Sätze von vorläufigen Soll-Prozesskonfigurationsparametern, wobei diese Auswahl so erfolgt, dass der ausgewählte Satz ein vorbestimmtes Bewertungskriterium für die Sätze von allen Sätzen am besten erfüllt. Auf diese Weise kann die Robustheit und somit auch Zuverlässigkeit der Prozessoptimierung weiter erhöht werden, da mehrere verschiedene Berechnungsverfahren zum Einsatz kommen und aus dem Ensemble die gemäß dem Bewertungskriterium beste Lösung ausgewählt wird.

Bei einigen dieser Ensemble-basierten Ausführungsformen ist oder wird das Bewertungskriterium in Abhängigkeit davon definiert, (i) für welchen Satz der vorläufigen Soll-Prozesskonfigurationsparameter die Metrik am besten erfüllt wurde; oder (ii) für welche Anzahl der Prozesskonfigurationsparameter des Satzes gilt, dass ihr jeweiliger Wert im Quervergleich unter Verwendung eines Ähnlichkeitsmaßes innerhalb der Menge der jeweiligen Werte für diesen Prozesskonfigurationsparameter aus allen Sätzen von vorläufigen Soll-Prozesskonfigurationsparametern am relativ häufigsten vorkommt, wobei jeder Satz von Prozesskonfigurationsparametern das Bewertungskriterium um so besser erfüllt, je höher diese Anzahl für diesen Satz ist.

Insbesondere kann zumindest eines der Berechnungsverfahren des Ensembles so gewählt sein oder werden, dass es kein maschinen-lernen-(ML)-basiertes Berechnungsverfahren ist. So lassen sich die Vorteile von ML-basierten und nicht-ML-basierten Berechnungsverfahren im Rahmen der vorgenannten Ensemble-Methodik kombinieren, was wiederum dazu genutzt werden kann die Vielfalt der im Ensemble enthaltenen Berechnungsverfahren zu steigern und auf dieser Basis die Robustheit, Zuverlässigkeit und breite Einsetzbarkeit des Verfahrens nach dem ersten Aspekt zu steigern.

Insbesondere kann gemäß einiger Ausführungsformen zumindest eines der Berechnungsverfahren des Ensembles, welches kein maschinen-lernen-basiertes Berechnungsverfahren ist, aufweisen: (i) Segmentieren des während einer Ausführung des Prozesses auftretenden zeitlichen Verlaufs einer vom Prozessverlauf abhängigen und die Metrik direkt oder indirekt beeinflussenden Messgröße auf solche Weise, dass jedes Segment einen Zeitabschnitt dieses zeitlichen Verlaufs definiert, innerhalb dessen der Wert der Messgröße innerhalb eines vorbestimmten begrenzten Toleranzbereich um den Startwert oder Mittelwert der Messgröße im Zeitabschnitt verbleibt (z.B. Startwert +/- x%) verbleibt, und ein Segmentwechsel zu einem anderen Segment auftritt, wenn der Wert diesen begrenzten Wertebereich verlässt (die Messgröße kann dabei insbesondere durch die Zustandsdaten repräsentiert sein oder zusätzlich dazu verfügbar sein); (ii) Bestimmen der vorläufigen Soll-Prozesskonfigurationsparameter des diesem Berechnungsverfahren zugeordneten Satzes von vorläufigen Soll-Prozesskonfigurationsparametern so, dass die vorläufigen Soll-Prozesskonfigurationsparameter des Satzes in Abhängigkeit von denjenigen Ist-Prozesskonfigurationsparametern bestimmt werden, gemäß denen der Prozess während desjenigen der Segmente konfiguriert war, bei dem der Wert der Messgröße im Quervergleich unter allen Segmenten eine definierte Optimierungsgröße optimiert, insbesondere maximiert, hat. Die vorläufigen Soll-Prozesskonfigurationsparameter des Satzes können insbesondere so bestimmt werden, dass sie den genannten Ist-Prozesskonfigurationsparametern entsprechen.

Bei einigen dieser segmentbasierten Ausführungsformen ist oder wird die Messgröße so gewählt, dass sie ein Maß für zumindest eine der folgenden Größen oder eine Kombination aus zumindest zwei solcher Größen angibt: (i) eine Durchsatzrate des Prozesses; (ii) eine Verfügbarkeit (z.B. zeitliche Verfügbarkeit, Uptime) des Prozesses; (iii) eine Quantität der hergestellten oder bearbeiteten Produkte; (iv) eine Qualität der hergestellten oder bearbeiteten Produkte; (v) den jeweiligen Wert zumindest eines der Ist-Prozesskonfigurationsparameter. Diesen Größen ist gemein, dass ihre Optimierung regelmäßig zugleich mit einer Prozessoptimierung im Hinblick auf eine möglichst hohe OEE einhergeht.

Bei einigen der segmentbasierten Ausführungsformen ist oder wird die Optimierungsgröße als oder in Abhängigkeit einer der folgenden Größen definiert: (i) Durchschnittswert der Messgröße während des jeweiligen Segments; (ii) Durchschnittswert der Messgröße während eines bestimmten zusammenhängenden oder kumulierten in dem jeweiligen Segment liegenden Zeitraums einer für alle Segmente gleichen definierten Dauer T, wobei der jeweilige Zeitraum innerhalb eines Segments so gewählt wird, dass er innerhalb des Segments die Messgröße im Quervergleich unter mehreren, insbesondere allen, möglichen Zeiträumen der Dauer T innerhalb des Segments optimiert; (iii) Segmentdauer. Diese Optimierungsgrößen haben insbesondere den Vorteil, dass sie einerseits einfach und schnell bestimmbar, sind und somit vor allem auch eine dynamische Prozessoptimierung erleichtern, während sie andererseits viele, insbesondere unregelmäßig oder mit höherer Frequenz auftretende Schwankungen und Störungen ausfiltern und somit zur weiteren Steigerung der Robustheit und Zuverlässigkeit des Optimierungsverfahrens genutzt werden können.

Bei einigen Ausführungsformen weist das Optimierungsverfahren zumindest ein an den Prozess angepasstes und dabei auf maschinellem Lernen, ML, beruhendes Berechnungsverfahren auf, bei dem ein ML-Modell zum Einsatz kommt, das Merkmale aus den Input-Daten als Input verwendet und einen, insbesondere skalaren oder vektoriellen, Wert für die Metrik (beispielsweise ein Maß für eine Prozessablaufgeschwindigkeit bzw. Durchsatzrate), als Output liefert. Diese Ausführungsformen können insbesondere sowohl für ein Training des Modells, insbesondere im Sinne eines überwachten Lernens (engl. "Supervised Learning") als auch im Rahmen der Bestimmung bzw. Vorhersage von optimierten Soll-Prozesskonfigurationsparametern im bzw. für den operativen Betrieb der Anlage genutzt werden, insbesondere im Rahmen der vorgenannten Ensemble-Methode.

Bei einigen dieser Ausführungsformen werden die von dem ML-Model als Input verwendeten Merkmale zumindest teilweise unter Verwendung einer, insbesondere Bayes'schen oder auf einem künstlichen neuronalen Netz beruhenden, Optimierungsmethode und in Abhängigkeit von ihrem jeweiligen Einfluss auf die Metrik als Untermenge aus der Menge aller Merkmale ausgewählt. So kann insbesondere eine Untergruppe von verfügbaren Merkmalen ausgewählt werden, die die meisten bzw. für die Prozessoptimierung günstigsten Informationen über die Gesamtanlageneffizienz (OEE) enthalten. So kann die Effizienz des Verfahrens gesichert und optimiert werden, weil, Merkmale mit hohem Einfluss auf die Prozessoptimierung, insbesondere auf die OEE, weiterhin, insbesondere bevorzugt, genutzt werden können, während weniger einflussreiche Merkmale nicht oder nur nachgeordnet berücksichtigt werden und somit die Menge der Merkmale effektiv begrenzt werden kann. Künstliche neuronale Netze können hier insbesondere für das Feature-Engineering und für die Erzeugung von Merkmalen mit Ausfallwahrscheinlichkeit vorteilhaft eingesetzt werden.

Bei einigen Ausführungsformen wird für zumindest einen der mittels der Input-Daten als Prozesskonfigurationsparameter oder Zustandsparameter zur Verfügung gestellten Parameter für ein definiertes mit der Zeit gleitendes Zeitfenster zumindest eine der folgenden Größen oder zumindest eine davon abhängige Größe bestimmt und von dem ML-Modell als Merkmal verwendet:
- der gleitende Mittelwert der jeweiligen Ist-Werte des Parameters, deren zugeordneten Zeitpunkte oder Zeiträume innerhalb des Zeitfensters liegen;
- ein exponentiell gewichteter gleitender Mittelwert der jeweiligen Ist-Werte des Parameters, deren zugeordneten Zeitpunkte oder Zeiträume innerhalb des Zeitfensters liegen, wobei die Gewichtung mittels einer Exponentialfunktion so erfolgt, dass die Ist-Werte zu jüngeren Zeitpunkten gegenüber den Ist-Werten älterer Zeitpunkte höher gewichtet werden;
- der gleitende Mittelwert der Standardabweichung der Verteilung der Ist-Werte des Parameters, deren zugeordneten Zeitpunkte oder Zeiträume innerhalb des Zeitfensters liegen;
- Die Anzahl der Änderungen des Ist-Werts des Parameters innerhalb des Zeitfensters;
- Die auf eine definierte Zeitspanne bezogene maximale Anzahl der Änderungen des Ist-Werts des Parameters innerhalb des Zeitfensters;
- Die kumulierte absolute Dauer oder auf die Dauer des Zeitfenster bezogene relative Dauer derjenigen Zeiträume, während denen gemäß den Ist-Werten des Parameters der Prozess angehalten bzw. die Anlage ausgefallen war oder stillgestanden hatte;
- Eine zu einem Wert des Parameters korrespondierende und diesen Wert charakterisierende numerische Größe, wenn dieser Parameter an sich eine nicht-nummerische Größe charakterisiert.

Derart definierte Merkmale können insbesondere vorteilhaft dazu eingesetzt werden, den Werteverlauf der Merkmale zum Zwecke einer Erhöhung der Robustheit des Verfahrens gegen kurzfristige zeitliche Schwankungen der Parameterwerte zu glätten, sowie im Falle der letztgenannten Option auch ihrer Art nach an sich nicht-nummerische Parameter in das Verfahren mittels korrespondierender numerischer Werte als Merkmale einbeziehen zu können.

Diesen Merkmalen ist vorteilhaft gemein, dass sie besonders einfach und ohne großen Rechenaufwand zu bestimmen sind und zudem eine gute Robustheit gegenüber kleinen oder unregelmäßigen Prozessschwankungen aufweisen.

Bei einigen Ausführungsformen weist das Bestimmen der Soll-Prozesskonfigurationsparameter auf Basis des ML-Modells auf: (i) Feststellen eines lokalen oder absoluten Optimums im zeitlichen Verlauf des von dem ML-Modell auf Basis der Input-Daten als Output ausgegebenen Werts der Metrik; und (ii) Bestimmen der Soll-Prozesskonfigurationsparameter in Abhängigkeit von den zu dem festgestellten Optimum korrespondierenden Ist- Prozesskonfigurationsparameter aus den Input-Daten. Das zu bestimmende Optimum kann dabei im Falle einer mehrelementigen Metrik (Vektor), wie sie bei Verwendung mehrerer KPI vorkommen kann, als Optimum bezüglich der Metrik als Ganzes (anstelle nur eines Metrikelements) definiert sein. Diese Ausführungsformen zeichnen sich dadurch aus, dass sie auf einfache Weise das Auffinden einer im Sinne der Metrik optimalen Prozesskonfiguration ermöglichen.

Bei einigen Ausführungsformen nutzt das ML-Model eine oder mehrere der folgenden ML-Methoden: Random Forests, Gradientenverstärkte Regression (engl. "Gradient Boosting"); Künstliches neuronales Netzwerk. Innerhalb der verfügbaren Menge bekannter ML-Methoden zur Bildung von ML-Modellen haben sich speziell die vorgenannten drei Methoden jeweils als besonders geeignet, insbesondere als sehr effizient und performant und zugleich ausreichend genau, für die Zwecke der Prozessoptimierung gemäß dem vorliegenden Verfahren nach dem ersten Aspekt erwiesen.

Bei einigen Ausführungsformen wird das Verfahren zum Optimieren einer variablen parametrisierten Prozesskonfiguration einer technischen Anlage zur Herstellung oder Bearbeitung von Produkten zumindest einer der folgenden Produktarten eingesetzt:
- Produkte, die Material aus Papier, Karton oder Pappe aufweisen;
- Folien;
- Lebensmittel;
- Stahl;
- Tabak;
- Textilien;
- Pharmazeutika.

Ein zweiter Aspekt der Erfindung betrifft ein Anlagensteuerungssystem, das konfiguriert ist, einen zur Ausführung auf einer technischen Anlage ablauffähigen Prozess zur Herstellung oder Bearbeitung von Produkten nach dem Verfahren nach dem ersten Aspekt der Erfindung gemäß der optimierten Prozesskonfiguration zu konfigurieren bzw. zu steuern.

Das Anlagensteuerungssystem kann dabei insbesondere selbst einen Teil der Anlage darstellen, oder aber separat davon, insbesondere auch an einem anderen Ort, angeordnet und betrieben werden. Das Anlagensteuerungssystem kann insbesondere ein Datenverarbeitungssystem, insbesondere ein lokales oder verteiltes Computersystem, sein oder ein solches aufweisen.

Ein dritter Aspekt der Erfindung betrifft ein Computerprogramm umfassend Befehle, die bewirken, dass ein Anlagensteuerungssystem nach dem zweiten Aspekt das Verfahren nach dem ersten Aspekt ausführt.

Das Computerprogramm kann insbesondere auf einem nichtflüchtigen Datenträger gespeichert sein. Bevorzugt ist dies ein Datenträger in Form eines optischen Datenträgers oder eines Flashspeichermoduls. Dies kann vorteilhaft sein, wenn das Computerprogramm als solches unabhängig von einer Prozessorplattform gehandelt werden soll, auf der das ein bzw. die mehreren Programme auszuführen sind. In einer anderen Implementierung kann das Computerprogramm als eine Datei auf einer Datenverarbeitungseinheit, insbesondere auf einem Server vorliegen, und über eine Datenverbindung, beispielsweise das Internet oder eine dedizierte Datenverbindung, wie etwa ein proprietäres oder lokales Netzwerk, herunterladbar sein. Zudem kann das Computerprogramm eine Mehrzahl von zusammenwirkenden einzelnen Programmmodulen aufweisen, die sogar auf verschiedenen Computer im Sinne von "distributed computing" ablaufen und insgesamt zusammenwirken können. Das Computerprogramm kann insbesondere zur Ausführung in einer Cloud-Umgebung vorgesehen oder konfiguriert sein und mit lokalen Client-Applikationen oder Web-Schnittstellen (z.B. Browser) zur Informationsausgabe oder Benutzer-Interaktion zusammenwirken.

Das Anlagensteuerungssystem kann entsprechend einen Programmspeicher aufweisen, in dem das Computerprogramm abgelegt ist. Alternativ kann das Anlagensteuerungssystem auch eingerichtet sein, über eine Kommunikationsverbindung auf ein extern, beispielsweise auf einem oder mehreren Servern oder anderen Datenverarbeitungseinheiten verfügbares Computerprogramm zuzugreifen, insbesondere um mit diesem Daten auszutauschen, die während des Ablaufs des Verfahrens bzw. Computerprogramms Verwendung finden oder Ausgaben des Computerprogramms darstellen.

Die in Bezug auf den ersten Aspekt der Erfindung erläuterten Merkmale und Vorteile gelten entsprechend auch für die weiteren Aspekte der Erfindung.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt:
**Fig. 1** schematisch eine beispielhafte Ausführungsform einer technischen Anlage zur Ausführung eines konfigurierbaren Prozesses zur Herstellung oder Bearbeitung von Produkten, sowie eine Black-Box-Darstellung dieses Prozesses einschließlich seiner Input- und Output-Daten;
**Fig. 2** eine schematische Illustration zur Erläuterung von Centerlining;
**Fig. 3** ein Flussdiagramm zur Veranschaulichung einer beispielhaften Ausführungsform des erfindungsgemäßen Verfahrens zur Prozessoptimierung;
**Fig. 4** eine schematische Illustration zur Erläuterung einer im Rahmen des Verfahrens aus Fig. 3 genutzten Ensemble-Methode, gemäß einer beispielhaften Ausführungsform;
**Fig. 5** eine schematische Illustration eines ersten ML-Berechnungsverfahrens, gemäß einiger Ausführungsformen der Erfindung;
**Fig. 6** eine schematische Illustration eines zweiten ML-Berechnungsverfahrens, gemäß einiger Ausführungsformen der Erfindung;
**Fig. 7** eine schematische Illustration zur Erläuterung der Verfahren aus den Figuren 5 und 6 sowie von deren Unterschied;
**Fig. 8** eine schematische Illustration eines zweiten nicht-ML-Berechnungsverfahrens, gemäß einiger Ausführungsformen der Erfindung;
**Fig. 9** eine schematische Illustration eines zweiten nicht-ML-Berechnungsverfahrens, gemäß einiger Ausführungsformen der Erfindung; und
**Fig. 10** eine schematische Illustration eines dritten nicht-ML-Berechnungsverfahrens, gemäß einiger Ausführungsformen der Erfindung.

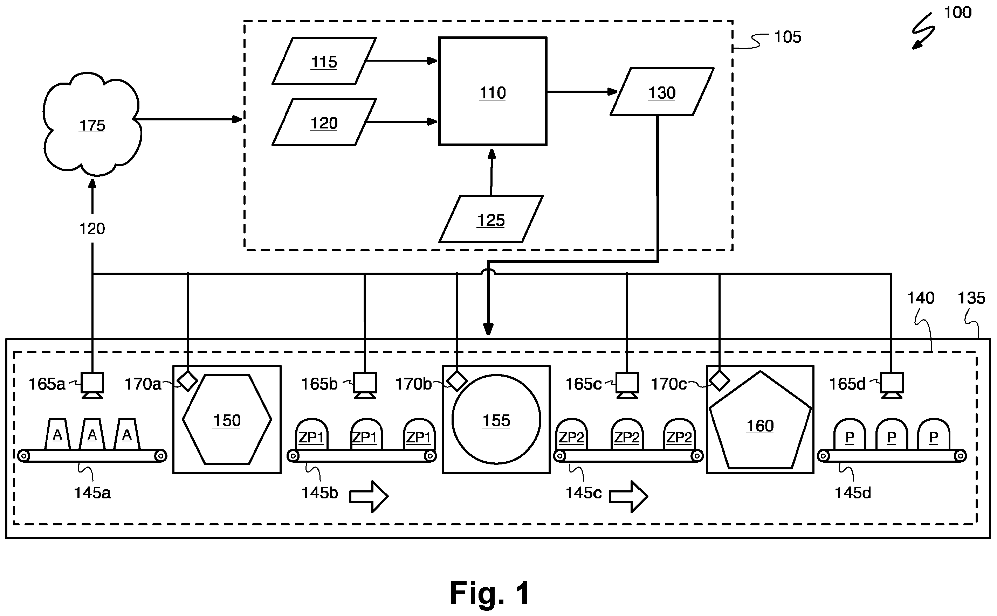

**Fig. 1** illustriert gemäß einer beispielhaften Ausführungsform der Erfindung eine Übersichtsdarstellung 100 einerseits einer technischen Anlage 135 zur Ausführung eines mittels einer Anzahl M>1 verschiedener Prozesskonfigurationsparameter konfigurierbaren Prozesses 140 zur Herstellung oder Bearbeitung von Produkten und andererseits eines anhand eines Optimierungsprozesses 105 repräsentierten Verfahrens zur Bestimmung einer, insbesondere im Sinne von Centerlining, optimierten Prozesskonfiguration des Prozesses 140. Da die technische Anlage 135 zur Ausführung des Prozesses 140 vorgesehen ist, korrespondiert die optimierte Prozesskonfiguration des Prozesses 140 zu einer entsprechenden optimierten Konfiguration der Anlage 135.

Die Anlage 135 weist hier beispielhaft drei verschiedene Bearbeitungsstationen 150, 155 und 160 auf, wobei es sich bei diesen Bearbeitungsstationen grundsätzlich um beliebige Einrichtungen zur Herstellung oder Bearbeitung von Produkten P, insbesondere auch von Ausgangsstoffen oder Ausgangsprodukten A oder Zwischenprodukten ZP1 oder ZP2 zu ihrer Herstellung, handeln kann. Die Bearbeitungsstationen 150, 155 bzw. 160 können insbesondere Einrichtungen zur mechanischen, elektromagnetischen, optischen, thermischen oder chemischen Bearbeitung der Ausgangsstoffe/-produkte A oder Zwischenprodukte ZP1 bzw. ZP2 sein. Zum Transport der Ausgangsstoffe/- produkte A bzw. Zwischenprodukte ZP1, ZP2 verfügt die Anlage 135 über verschiedene Fördereinrichtungen 145a bis 145d, die insbesondere Förderbänder sein oder aufweisen können.

Des Weiteren verfügt die Anlage 135 über eine Sensorik, welche insbesondere eine Mehrzahl verschiedener Sensoren 165a bis 165d und 170a bis 170c an verschiedenen Stellen der Anlage 135 aufweisen kann. Zu solchen Sensoren können insbesondere Sensoren 165a bis 165d gehören, die eine momentane Position oder Orientierung oder einen momentanen Zustand oder eine sonstige Eigenschaft der Ausgangsstoffe/- produkte A bzw. Zwischenprodukte ZP1, ZP2 oder Endprodukte P sensorisch erfassen können. Darüber hinaus kann die Sensorik einen oder mehrere Sensoren 170a bis 170c aufweisen, mit denen eine oder mehrere momentane Zustände, insbesondere Maschinenzustände, der Bearbeitungsstationen 150, 155 bzw. 160 oder sonstiger Teile der Anlage 135, wie etwa der Fördereinrichtungen 145a bis 145d erfasst werden können. Solche Zustände können sich insbesondere auf die Position oder Ausrichtung, kinetische Parameter (wie etwa eine Geschwindigkeit, Drehgeschwindigkeit und Beschleunigung/Winkelbeschleunigung) von beweglichen Teilen der Anlage oder eine Temperatur oder einen lokalen Druck in einem Bereich der Anlage beziehen.

Die mittels der Sensorik während des Betriebs der Anlage 135 wiederholt oder fortlaufend für aufeinanderfolgende Erfassungszeitpunkte ("Zeitpunkte") oder Erfassungszeiträume ("Zeiträume") erfassten Werte der sensorisch erfassten Messgrößen werden in Form von Zustandsdaten 120 von der Sensorik selbst oder gegebenenfalls einer die Rohdaten der Sensorik weiterverarbeitenden Einheit der Anlage (nicht dargestellt) dem Optimierungsprozess 105 in Form eines Satzes von N>1 Zustandsparametern zur Verfügung gestellt, was insbesondere über eine Kommunikationsnetz, beispielsweise einschließlich einer datentechnische Cloud 175, und gegebenenfalls mittels dortiger Zwischenspeicherung erfolgen kann. Die Zustandsdaten 120 repräsentieren somit für jeden Erfassungszeitpunkt bzw. Erfassungszeitraum jeweils einen zugehörigen jeweiligen tatsächlichen Ist-Betriebszustand der Anlage 135 mittels jeweiliger Ist-Werte einer Anzahl N>1 von verschiedenen Zustandsparametern der Anlage 135.

Die Anlage 135 kann, etwa im Sinne einer Fertigungslinie, an einem einzigen Standort, insbesondere in einer Fertigungsstätte, lokalisiert sein, oder aber stattdessen über mehrere voneinander beabstandete, möglicherweise sogar weit auseinanderliegende, Standorte (z.B. in verschiedenen geographischen Orten, wie etwa Städten, Ländern oder sogar Kontinenten) verteilt sein, wobei die an den verschiedenen Standorten lokalisierten Einheiten der Anlage 135 jedoch, einerseits was den Produkt- bzw. Materialfluss und andererseits was die Steuerung der Anlage 135 angeht, eine virtuelle bzw. logische Einheit bilden und somit zum Zwecke der Prozessoptimierung als eine einzige Anlage 135, die insgesamt den Prozess 140 ausführen kann, angesehen werden können.

Der Optimierungsprozess 105, der im oberen Teil der Fig. 1 illustriert ist, ist durch ein Anlagensteuerungssystem 110 ausführbar, welches insbesondere eine Datenverarbeitungseinheit sein oder aufweisen kann. Es ist auch möglich, dass das Anlagensteuerungssystem 110 aus mehreren verschiedenen Einheiten, insbesondere Datenverarbeitungseinheiten, aufgebaut ist, die im Sinne eines verteilten Computersystems räumlich über verschiedene Standorte verteilt und über Kommunikationsstrecke miteinander vernetzt sein können.

Die Optimierungsprozess 105 erhält als Input-Daten einerseits die bereits erwähnten Zustandsdaten ("SD") 120 und andererseits historische Prozesskonfigurationsdaten 115, die für die schon im Zusammenhang mit den Zustandsdaten genannten gegenwärtigen oder vergangenen Zeitpunkte oder Zeiträume während zumindest einer Ausführung des Prozesses die dabei jeweils genutzte tatsächliche Prozesskonfiguration des Prozesses 140 anhand von diese jeweilige Prozesskonfiguration definierenden Ist-Werten der Prozesskonfigurationsparameter repräsentieren. Bei einem komplexen Prozess 140 ist die Gesamtanzahl Y= M+N der Prozesskonfigurationsparameter und Zustandsparameter typischerweise hoch (z.B. Y>10 oder Y>30 oder sogar Y>100).

Des Weiteren umfassen die Input-Daten auch Produktionsdaten ("PD") 125, die zumindest eine durch den Prozess 140 beeinflussbare Soll-Eigenschaft der aus dem Prozess resultierenden Produkte P oder zumindest eine Ist- oder Soll-Eigenschaft zumindest eines dazu eingesetzten Ausgangsstoffes oder Ausgangsprodukts A repräsentieren. Insbesondere können die Produktionsdaten eine Spezifikation der mittels des Prozesses 140 herzustellenden bzw. zu erhalten Produkte P, und optional auch deren Anordnung Verpackung usw. repräsentieren. Die Produktionsdaten 125 dienen somit insbesondere als Randbedingungen für den Optimierungsprozess 105.

Als Ergebnis des Optimierungsprozesses 105 wird ein mittels des Optimierungsprozesses 105 bestimmter Satz von Soll-Prozesskonfigurationsparametern 130 ausgegeben, insbesondere in Form von Konfigurationsdaten, und zur Steuerung, insbesondere zur Einstellung, der Anlage 135 verwendet, um die Anlage 135 für den weiteren zeitlichen Verlauf des Prozesses 140 bis gegebenenfalls zu einer Aktualisierung der Soll-Prozesskonfigurationsparameter zu einem späteren Zeitpunkt gemäß dem ausgegebenen Satz der Soll-Prozesskonfigurationsparameter 130 zu konfigurieren.

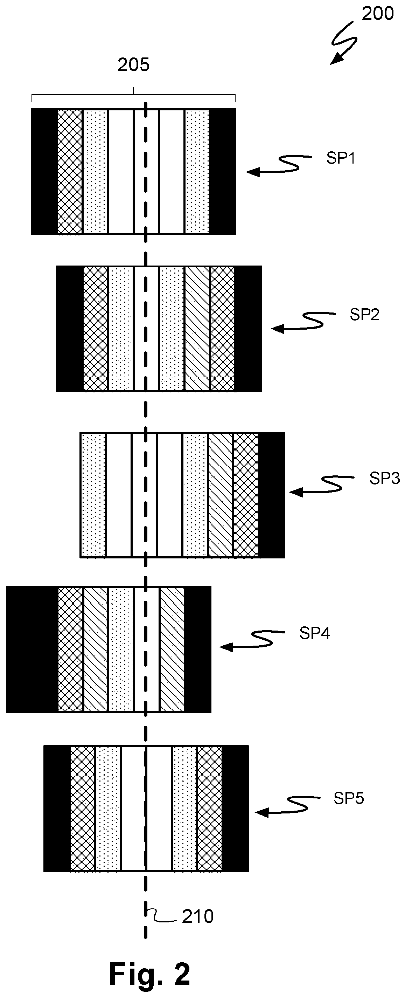

Verschiedene Ausführungsformen des Optimierungsprozesses 105 werden im Weiteren unter Bezugnahme auf die **Figuren 2 bis 10** erläutert.

In **Fig. 2** ist schematisch das Prinzip des Centerlining (d.h. des Bestimmens der Centerline bzw. Mittellinie) anhand eines beispielhaften Satzes 200 von zum Zwecke der Übersichtlichkeit (nur) fünf Prozesskonfigurationsparametern (Setpoints) SP1 bis SP5 der Anlage 135 illustriert. In der Praxis wird typischerweise eine deutlich höhere Anzahl von Prozesskonfigurationsparametern im Rahmen des Centerlining berücksichtigt werden.

Beim Centerlining in Bezug auf einen Prozess, wie im vorliegenden Beispiel dem Prozess 140, geht es nun darum, eine solche Konfiguration des Prozesses aufzufinden und für zumindest einen nachfolgenden Zeitabschnitt für den weiteren Betrieb der Anlage, hier der Anlage 135, zu nutzen, die bezüglich der Optimierungsziele einer Verringerung der Prozessvariabilität und/oder einer Erhöhung der Anlageneffizienz bei der Herstellung oder Bearbeitung von Produkten optimiert ist. Um zu messen, wie gut ein solches Centerlining für den Prozess tatsächlich erreicht wurde, werden oftmals als Leistungskennzahlen (KPI) verwendet, insbesondere die Prozessfähigkeit, oder die Gesamtanlageneffektivität (GAE bzw. OEE), die zumindest eines der vorgenannten Optimierungsziele repräsentieren. Eine Optimierung wird dabei nicht allein durch Optimierung eines einzelnen Prozesskonfigurationsparameters, sondern durch eine Gesamtoptimierung über den ganzen Satz der Prozesskonfigurationsparameter hinweg angestrebt.

In Fig. 2 sind für jeden der Prozesskonfigurationsparameter SP1 bis SP5 verschiedene diskrete Konfigurationsmöglichkeiten 205, d. h. Parameterwerte, anhand eines jeweiligen Balkenrasters illustriert. Die Balken sind dabei teilweise mit einer Füllung oder Schraffur versehen, um zu kennzeichnen, inwieweit sich der durch den jeweiligen Balken charakterisierte Parameterwert von dem durch die gesuchte Mittellinie (Centerlinie) 210, d. h. dem optimierten Satz von Werten für die Prozesskonfigurationsparameter SP1 bis SP5, unterscheidet. Sehr gute oder sogar bestmögliche Werte sind dabei durch ungefüllte Balken dargestellt, wird mit zunehmender Stärke der Schraffur bzw. Füllung zu den Randbereichen des jeweiligen Balkenrasters hin, sich die Parameterwerte immer weiter von der gesuchten Mittellinie 210 entfernen.

Ziel des Centerlining ist es hierbei somit, die jeweiligen Werte für sämtliche der Prozesskonfigurationsparameter SP1 bis SP5 so zu bestimmen, dass sie zusammen eine Mittellinie 210 bilden die bezüglich eines als Zielgröße eingesetzten Satzes aus einer oder mehreren KPIs ein Optimum darstellt. Wenn die Prozesskonfigurationsparameter SP1 bis SP5 voneinander unabhängig wären, so könnte jeder der Prozesskonfigurationsparameter SP1 bis SP5 einzeln und unabhängig von den anderen im Hinblick auf die Zielgröße optimiert werden. In der Regel sind die einzelnen Prozesskonfigurationsparameter jedoch gerade nicht (alle) voneinander unabhängig, so dass im Rahmen des Centerlining das Optimum auf Basis des Satzes von Prozesskonfigurationsparametern SP1 bis SP5 als Ganzes und nicht nur auf Basis einer individuellen jeweiligen Optimierung der einzelnen Prozessparameterwerte aufgefunden werden muss, um die Zielgröße zu optimieren.

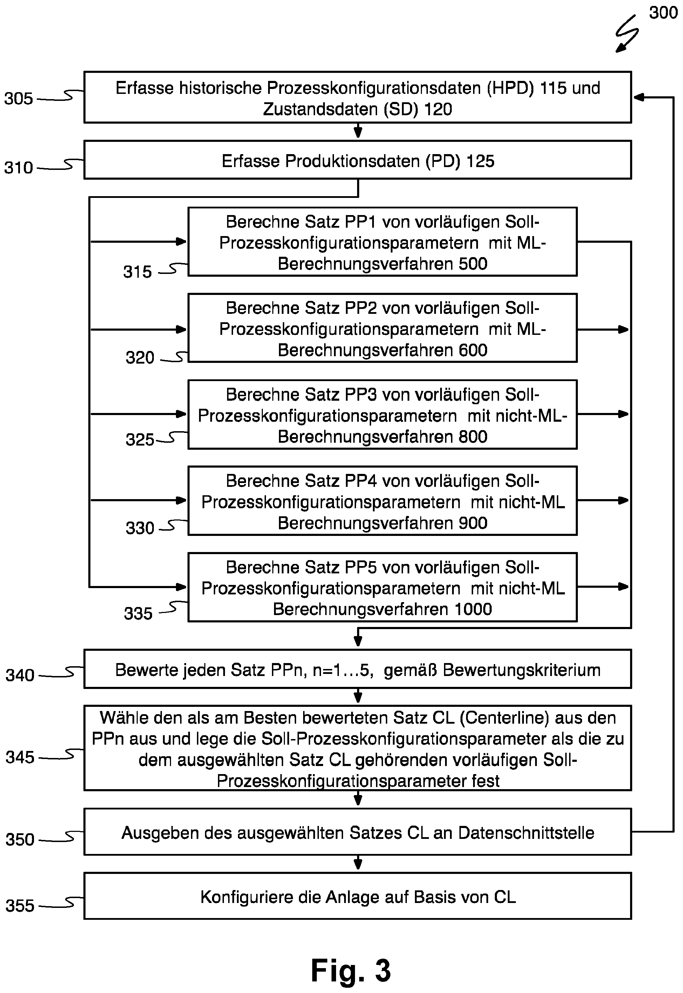

**Fig. 3** zeigt ein Flussdiagramm zur Veranschaulichung einer beispielhaften Ausführungsform 300 des erfindungsgemäßen Verfahrens zur Prozessoptimierung, bei dem mittels des Optimierungsprozesses 105 eine Prozessoptimierung auf Basis verschiedener einzelner Optimierungsmethoden verwendet wird.

Bei dem Verfahren 300 werden, wie hier beispielhaft anhand des Schritts 305 illustriert, sowohl historische Prozesskonfigurationsdaten ("HPD") 115 als auch Zustandsdaten ("SD") 120 erfasst, wie vorausgehend unter Bezugnahme auf Fig. 1 beschrieben. Das Erfassen dieser Daten kann insbesondere das sensorische Messen der durch diese Daten repräsentierten Größen selbst oder stattdessen nur das Empfangen der bereits gewonnenen Daten, insbesondere über eine Datenschnittstelle bzw. mittels Auslesen aus einem Speicher aufweisen.

Zudem werden in einem Schritt 310 die Produktionsdaten ("PD") 125 erfasst. Das Erfassen der verschiedenen Daten 115, 120 und 125 kann wahlweise gleichzeitig innerhalb desselben Schritts oder, wie hier illustriert, auf mehrere Schritte verteilt erfolgen.

Nun beginnt die eigentliche Optimierung, wozu im vorliegenden Verfahren 300 verschiedene Optimierungsmethoden genutzt werden, die jeweils durch ein entsprechendes Berechnungsverfahren 500, 600, 800, 900 bzw. 1000 implementiert sind und in entsprechenden, insbesondere parallel ausführbaren Schritten 315, 320, 325, 330 bzw. 335 durchgeführt werden. Bei jedem dieser Berechnungsverfahren wird ein entsprechender Satz PP1, PP2, PP3, PP4 bzw. PP5 von vorläufigen Soll-Prozesskonfigurationsparametern berechnet. Jeder dieser Sätze bildet das Optimierungsergebnis des jeweiligen Berechnungsverfahrens ab. "Vorläufig" bedeutet hier, dass diese Sätze vorläufigen Soll-Prozesskonfigurationsparametern die schlussendlich aus dem Verfahren resultierende Centerline CL noch nicht abschließend festlegen, da die Centerline, wie nachfolgend beschrieben, erst noch als einer dieser Sätze ausgewählt werden muss.

Zur Bestimmung einer Centerline CL, also des auszugebenden und insbesondere zumindest teilweise auch zur Konfiguration der Anlage 135 zu bestimmenden Soll-Prozesskonfigurationsparameter, werden im Rahmen des Verfahrens 300 die verschiedenen Berechnungsverfahren 500, 600, 800, 900 und 1000 als ein Ensemble verschiedener Optimierungsverfahren betrachtet und die Centerline durch Auswahl eines gemäß einem Bewertungskriterium optimalen Satzes der aus diesem Ensemble erhaltenen Sätze PP1, PP2, PP3, PP4 bzw. PP5 von vorläufigen Soll-Prozesskonfigurationsparametern bestimmt. Dazu werden die Sätze PP1, PP2, PP3, PP4 bzw. PP5 zunächst in einem Schritt 340 jeweils gemäß dem Bewertungskriteriums bewertet und sodann wird im Schritt 345 der als gemäß dem Bewertungskriterium am besten bewertete Satz als Centerline CL festgelegt.

schließlich wird die Centerline im Schritt 350 ausgegeben, insbesondere an einer Datenschnittstelle zur zu konfigurierenden technischen Anlage 135, sodass diese im Schritt 355 entsprechend der Centerline CL konfiguriert wird.

Es ist jedoch zu bemerken, dass die vorausgehend beschriebene Verwendung eines Ensembles verschiedener Berechnungsverfahren nur eine von vielen Möglichkeiten ist. Insbesondere ist es auch möglich, nur ein einziges auf Maschinenlernen beruhendes Berechnungsverfahren zu nutzen, im vorliegenden Beispiel also eines der Berechnungsverfahren 500 und 600. In diesem Falle sind die Schritte 340 und 345 obsolet, da dann ja nur ein einziger Satz von vorläufigen Soll-Prozesskonfigurationsparameter vorliegt, der zugleich die Centerline CL repräsentiert.

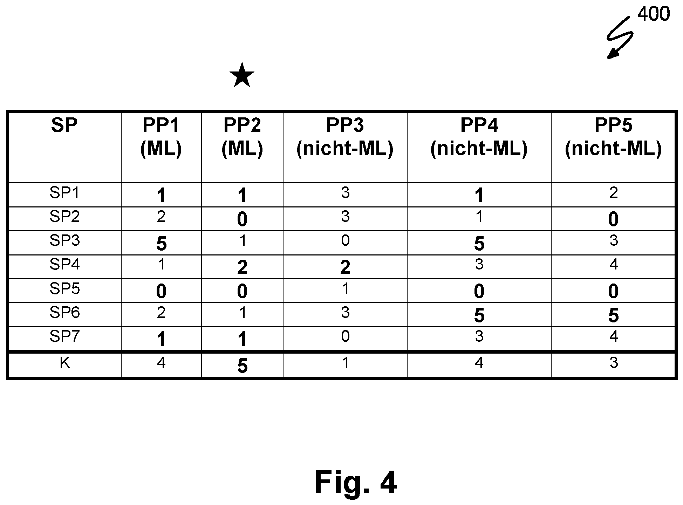

Zur Erläuterung einer beispielhaften Ausführungsform einer Ensemblemethode zur Verwendung im Verfahren 300, insbesondere in dessen Schritten 340 bzw. 345, wird noch **Fig. 4** Bezug genommen. In Erweiterung der Darstellung aus Fig. 2 wird dazu ein Prozess 140 mit sieben Prozesskonfigurationsparameter (Setpoints) SP1 bis SP7 betrachtet. Diese geringe Anzahl von Prozesskonfigurationsparameter ist wieder zum Zwecke der leichteren Illustration gewählt. Bei der praktischen Umsetzung des Verfahrens werden in Abhängigkeit von der Prozesskomplexität in vielen Fällen deutlich höhere Anzahlen von Prozesskonfigurationsparametern verwendet werden.

Die in Fig. 4 dargestellte Tabelle 400 zeigte in den Spalten 2 bis 6 jeweils die mittels eines zugeordneten der Berechnungsverfahren 500, 600, 800, 900 bzw. 1000 bestimmten Sätze PP1 bis PP5 von vorläufigen Soll-Prozesskonfigurationsparametern. Die einzelnen Prozesskonfigurationsparameter SP1 bis SP7 sind in den Zeilen der Tabelle 400 dargestellt.

Um den im Sinne der Prozessoptimierung besten Satz von vorläufigen Soll-Prozesskonfigurationsparametern als Centerline CL auszuwählen, wird nun für jeden der Prozesskonfigurationsparameter SP1 bis SP7 individuell im zeilenweisen Quervergleich über die Spalten hinweg bestimmt, welcher der im Rahmen der verschiedenen Sätze PP1 bis PP5 auftretende Parameterwert im Quervergleich am häufigsten vorkommt. Beispielsweise ist dies für den Parameter SP 1 der Wert "1" und für den weiteren Parameter SP2 der Wert "0". In der Tabelle 400 sind diese am häufigsten auftretenden Werte jeweils vergrößert und mit Fettschrift markiert. Insbesondere dann, wenn die möglichen Parameterwerte kontinuierlich sein können, kann der Wertebereich dafür jeweils unter Definition von Werteintervallen diskretisiert werden, wobei beispielsweise jedem Werteintervall sein Anfangs-, End- oder Mittelwert als diskreter Wert zugeordnet wird.

Sodann wird, wie in der letzten Zeile der Tabelle 400 dargestellt für jeden der Sätze PP1 bis PP5 gezählt, wie groß die Anzahl K seiner Parameterwerte ist, die zu diesen zeilenweise am häufigsten auftretenden Parameterwerten gehörten. Die Zahl K spielt hier die Rolle des Bewertungskriteriums aus Schritt 340 des Verfahrens 300 aus Fig. 3. Insbesondere ergibt sich aus Tabelle 400 im Falle des Satzes PP1 der Wert K = 4 und für den Satz PP2 der Wert K = 5 und damit zugleich, über sämtliche Sätze PP1 bis PP5 hinweg betrachtet, das höchste Ergebnis für K. Somit wird im Schritt 345 des Verfahrens 300 der Parametersatz PP2 als Centerline CL ausgewählt (mit einem Sternchen markiert).

Wenngleich im Rahmen der Ensemblemethodik schlussendlich nur ein einziger der vorläufigen Soll-Prozesskonfigurationsparametersätze PP1 bis PP5 als Centerline CL ausgewählt wird und somit in diesem Sinne nur eines der Berechnungsverfahren auf Basis der Bewertung gemäß dem Bewertungskriterium "gewinnt", haben über den Weg der Schritte 340 und 345 des Verfahrens 300 auch die anderen Berechnungsverfahren Einfluss auf das Ergebnis der Centerline-Auswahl. Mittels der Ensemblemethodik lassen sich somit Auswahlentscheidungen für die Prozessoptimierung treffen, die auf mehreren verschiedenen Berechnungsverfahren beruhen und somit, insbesondere im Hinblick auf Störungen durch Messfehler oder Modellungenauigkeiten der Berechnungsverfahren, besonders robuste und zuverlässige Ergebnisse liefern.

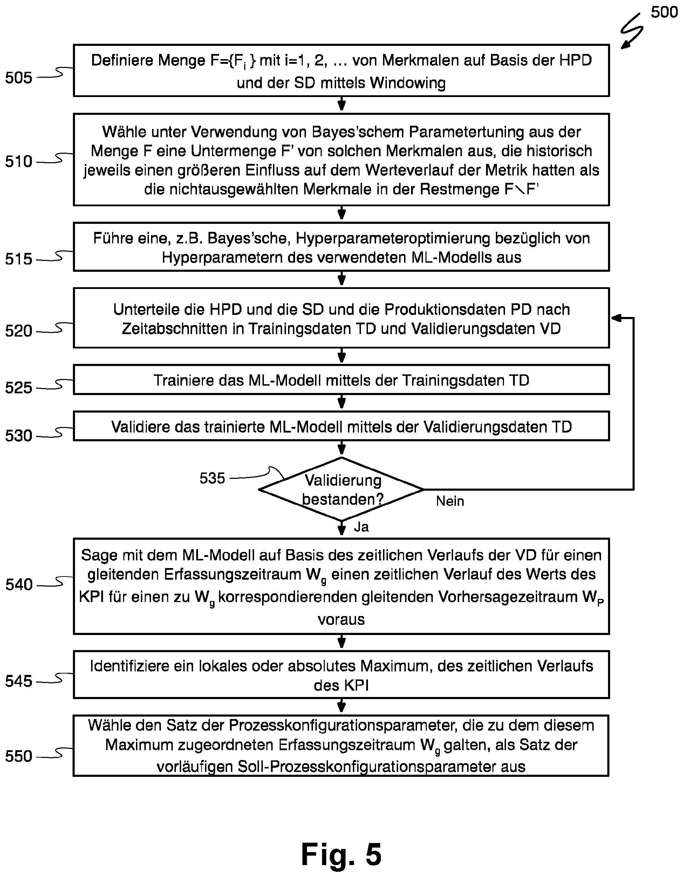

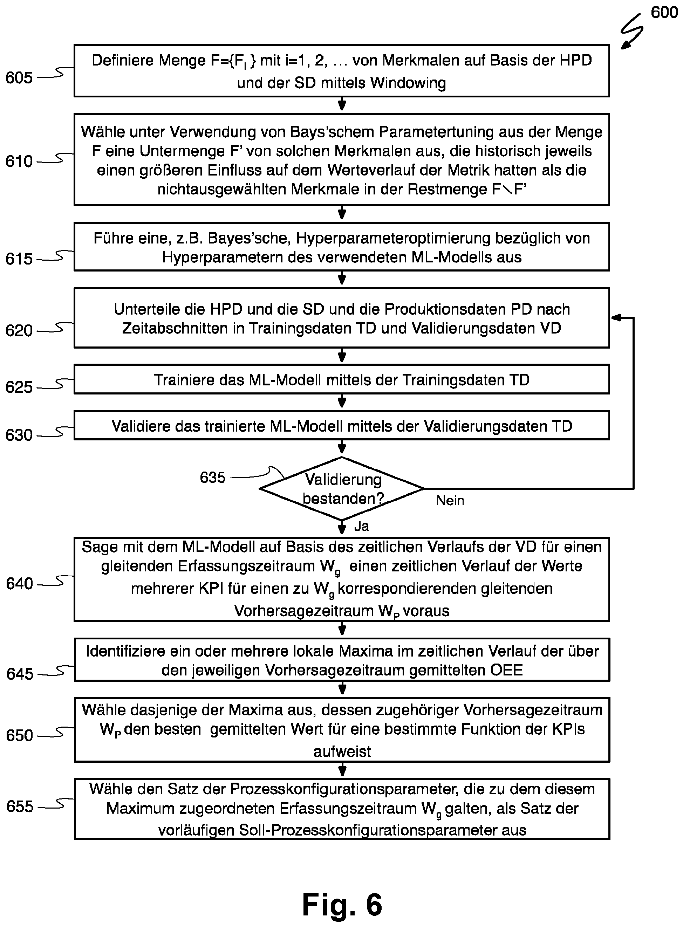

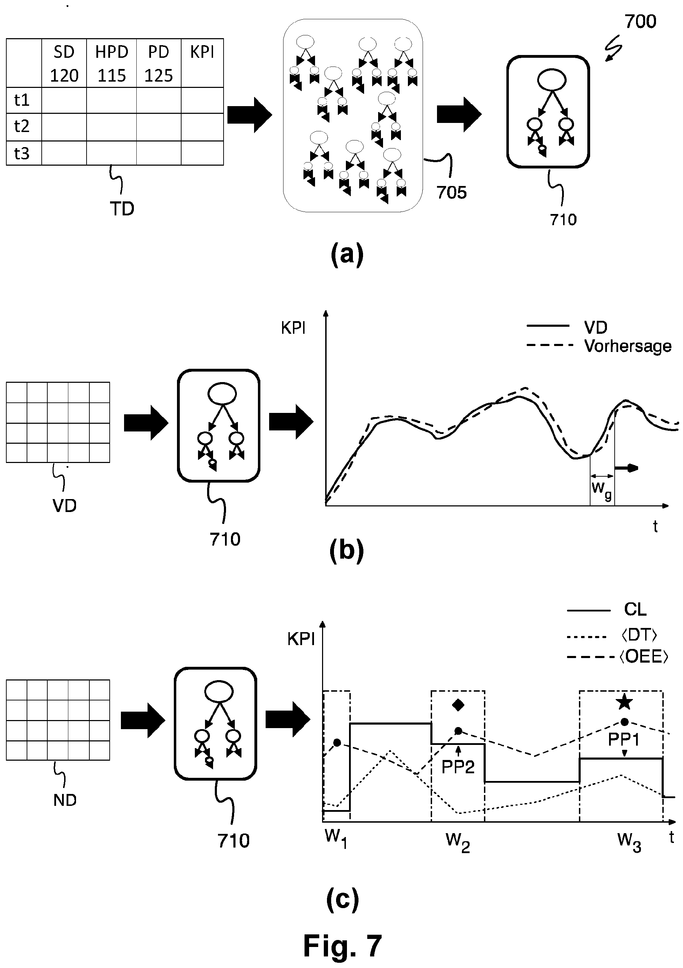

Unter Bezugnahme auf die nachfolgenden Figuren 5 bis 10 werden nun verschiedene beispielhafte Berechnungsverfahren 500, 600, 800, 900 und 1000 im Einzelnen erläutert werden, wobei Fig. 7 eine zusätzliche Illustration 700 zur Erläuterung der Verfahren 500 und 600 aus den Figuren 5 und 6 sowie von deren Unterschied darstellt.

Bei dem in **Fig. 5** illustrierten Berechnungsverfahren 500 handelt es sich um ein beispielhaftes Maschinenlernen (ML)-basiertes Verfahren zur Bestimmung eines Satzes von vorläufigen Soll-Prozesskonfigurationsparametern, wie beispielsweise des Satzes PP1 im Verfahren 300.

Bei dem Verfahren 500 wird, ausgehend von einem vorab ausgewählten ML-Modelltyp zunächst in einem Schritt 505 auf Basis der - wie in Fig. 1 illustriert - als Input-Daten verfügbaren historischen Prozesskonfigurationsdaten HPD (bzw. 115) und Zustandsdaten SD (bzw. 120) eine Menge F = {Fᵢ}, mit i = 1,2, ... , von Merkmalen (im Sinne des Maschinenlernens) definiert. Dazu kann insbesondere ein sogenannter "Fenster-Ansatz", der oft auch als "Windowing" bezeichnet wird, genutzt werden. Dabei wird der zeitliche Verlauf der Input-Daten durch ein entlang der Zeitrichtung gleitendes Zeitfenster festgelegter Zeitdauer betrachtet und eines oder mehrere der Merkmale Fᵢ auf Basis des zeitlichen Verlaufs der Ist-Werte der einzelnen Parameter aus den Input-Daten im jeweiligen Zeitfenster definiert. Insbesondere kann dies so erfolgen, dass für das gleitende Zeitfenster zumindest eine der folgenden Größen oder zumindest eine davon abhängige Größe bestimmt und von dem ML-Modell als Merkmal verwendet wird:
- der gleitende Mittelwert der jeweiligen Ist-Werte des Parameters, deren zugeordneten Zeitpunkte oder Zeiträume innerhalb des Zeitfensters liegen;
- ein exponentiell gewichteter gleitender Mittelwert der jeweiligen Ist-Werte des Parameters, deren zugeordneten Zeitpunkte oder Zeiträume innerhalb des Zeitfensters liegen, wobei die Gewichtung mittels einer Exponentialfunktion so erfolgt, das die Ist-Werte zu jüngeren Zeitpunkten gegenüber den Ist-Werten älterer Zeitpunkte höher gewichtet werden;
- der gleitende Mittelwert der Standardabweichung der Verteilung der Ist-Werte des Parameters, deren zugeordneten Zeitpunkte oder Zeiträume innerhalb des Zeitfensters liegen;
- Die Anzahl der Änderungen des Ist-Werts des Parameters innerhalb des Zeitfensters;
- Die auf eine definierte Zeitspanne bezogene maximale Anzahl der Änderungen des Ist-Werts des Parameters innerhalb des Zeitfensters;
- Die kumulierte absolute Dauer oder auf die Dauer des Zeitfenster bezogene relative Dauer derjenigen Zeiträume, während denen gemäß den Ist-Werten des Parameters der Prozess angehalten bzw. die Anlage ausgefallen war oder stillgestanden hatte;
- Eine zu einem Wert des Parameters korrespondierende und diesen Wert charakterisierende numerische Größe, wenn dieser Parameter an sich eine nicht-nummerische Größe charakterisiert.

Die von dem ML-Model nachfolgend als Input zu verwendenden Merkmale können dann im Schritt 510 zumindest teilweise unter Verwendung eines Optimierungsverfahrens, wofür hier insbesondere ein Bayes'sches Parametertuning als Methodik infrage kommt, und in Abhängigkeit von ihrem jeweiligen Einfluss auf die Metrik als Untermenge aus der Menge F = {Fᵢ} der definierten Merkmale ausgewählt werden. Da ist es günstig, wenn die Auswahl auf solche Weise erfolgt, dass insbesondere oder ausschließlich solche Merkmale aus der Menge F ausgewählt werden, die einen besonders großen Einfluss auf den Werteverlauf der Metrik (beispielsweise OEE oder Durchsatzrate der Anlage) während des betrachteten historischen Zeitverlaufs hatten. Insbesondere kann aus der Menge F eine Untermenge F' von solchen Merkmalen ausgewählt werden, die historisch jeweils einen größeren Einfluss auf den Werteverlauf der Metrik hatten als die nicht ausgewählten Merkmale in der Restmenge F\F'.

Für die ausgewählten Merkmale liegt dann somit der zeitliche Verlauf ihrer Werte für den betrachteten historischen Zeitraum vor, in dem sich das gleitende Zeitfenster bewegte, , wobei zu jeder zeitlichen Lage des Zeitfensters einer der Werte korrespondiert.

Unter der Vielzahl bekannter ML Verfahren-und Methoden hat sich für die Zwecke der vorliegenden Erfindung insbesondere herausgestellt, dass auf Entscheidungsbäumen beruhende ML-Modelle bzw. Methodiken und dabei insbesondere solche Typen, die dem Fachmann als "Random Forest" oder als "Gradient Boosting" (gradientenverstärkte Regression)-Modelle bzw. -Methodiken bekannt sind, vorteilhaft sind, da sie insbesondere besonders schnell und mit begrenztem Rechenaufwand bei gleichzeitig ausreichend hoher Ergebnisgenauigkeit einsetzbar sind.

Im Verfahren 500 folgt im Hinblick auf das ausgewählte ML-Modell sodann in einem Schritt 515 eine Hyperparameteroptimierung des ML-Modells, wozu insbesondere ein dem Fachmann als Bayes'sche (Hyperparameter-)Optimierung bekanntes Verfahren genutzt werden kann.

Im Bereich des maschinellen Lernens bezeichnet der Begriff "Hyperparameteroptimierung" die Suche nach optimalen Hyperparametern. Ein Hyperparameter ist ein Parameter des ML-Modells, der zur Steuerung seines Trainingsalgorithmus verwendet wird und dessen Wert im Gegensatz zu anderen Parametern (insbesondere von im Rahmen von Training zu bestimmenden Gewichten eines künstlichen neuronalen Netzes oder von Knoteneigenschaften eines Entscheidungsbaums) vor dem eigentlichen Training des ML-Modells festgelegt werden muss. Bei neuronalen Netzen sind beispielsweise die Anzahl der Ebenen des Netzes sowie die Anzahl der Knoten pro Ebene über Parameter des neuronalen Netzes (ML-Modells). Bei Entscheidungsbäumen können insbesondere die maximale Tiefe des Entscheidungsbaums oder die minimale Anzahl von Datenpunkten, die zur Definition einer weiteren Verzweigung erforderlich sind, oder andere die Struktur und Größe des Entscheidungsbaums betreffende Komplexitätsparameter jeweils Hyperparameter für den Entscheidungsbaum (ML-Modell) sein.

Nachdem nun das zu verwendende ML-Modell definiert ist folgt im Rahmen des Verfahrens 500 als nächstes eine Trainingsphase. Dabei wird im Schritt 525 das Modell mittels aus den dem Modell gemäß Fig. 1 zur Verfügung gestellten Inputdaten, d.h. den historischen Prozesskonfigurationsdaten HPD, den Zustandsdaten SD und den Produktionsdaten PD, ausgewählten Trainingsdaten TD im Sinne des Maschinenlernens trainiert. Die Auswahl der Trainingsdaten TD erfolgt dabei in einem vorgelagerten Schritt 520, bei dem die Input-Daten nach verschiedenen Zeitabschnitten separiert einerseits in die Trainingsdaten TD und andererseits in Validierungsdaten VD unterteilt werden. Insbesondere können die Validierungsdaten zu späteren Zeitabschnitten in dem durch die Input-Daten abgebildeten Zeitraum korrespondieren als die Trainingsdaten.

In Fig. **7 (a)** ist der Trainingsschritt 525 grafisch illustriert. Die Trainingsdaten TD sind hier in Form einer Wertetabelle dargestellt, in der für verschiedene durch die Input-Daten abgebildete Zeitpunkte t1, t2, usw. jeweils die zugehörigen Werte für die Zustandsdaten SD (bzw. 120), die historischen Prozesskonfigurationsdaten HPD (bzw. 115) aufgeführt sind. Zusätzlich ist auf jeden Zeitpunkt der zugehörige auf Basis der korrespondierenden Input-Daten erreichte Wert der zu optimieren Metrik für einen unmittelbar nachfolgenden Zeitraum in Form eines oder mehrerer Leistungskennzahlen (KPI) dargestellt. Nachfolgend wird beispielhaft der Fall eines einzigen KPI betrachtet. Insbesondere kann der KPI für jeden der Zeitpunkte als die über einen nachfolgenden Beobachtungszeitraum (z.B. nachfolgende x Stunden des Anlagenbetriebs) gemittelte OEE (d.h. (OEE)) definiert werden. Als weitere Inputdaten werden Produktionsdaten PD (bzw. 125) genutzt, die sich ebenfalls auf den Beobachtungszeitraum für den KPI beziehen und insbesondere die während dieses Zeitraums mit dem Prozess 140 auf der Anlage 135 hergestellten Produkte spezifizieren. Somit liegen für das Training des ML-Modells sowohl die Werte der Input-Daten SD, HPD, und PD als auch der zumindest eine dazu korrespondierende Wertverlauf der Output-Daten des ML-Modells, d. h. der zu optimierenden Metrik KPI, vor. In Fig. 7(a) wird beispielhaft ein Entscheidungsbaumbasiertes ML-Modell eingesetzt, wobei mittels des Trainings aus einer Vielzahl möglicher Konfigurierung ein 705 des Modells ein bestimmtes Modell 710 als nachfolgend anzuwendendes ML-Modell festgelegt wird.

Nun wird wieder auf **Fig. 5** Bezug genommen, wo nach dem Trainingsschritt 525 ein Validierungsschritt 530 folgt, in dem das bereits trainierte ML-Modell Mittels der im Schritt 520 bestimmten Validierungsdaten VD validiert wird. Dazu werden mittels des trainierten ML-Modells 710 auf Basis von aus den Validierungsdaten VD entnommenen historischen Ist-Werten der Input-Daten Voraussagen für die Output-Daten, d.h. KPI (z.B. (OEE)), gemacht und mit dem ebenfalls in den Validierungsdaten enthaltenen zugehörigen historisch bestimmten KPI abgeglichen, um die Qualität des trainierten Modells 710 zu prüfen. Dies ist in **Fig. 7 (b)** illustriert.

Besteht das trainierte ML-Modell 710 aufgrund gemäß einem definierten Validierungskriterium nicht ausreichend guter Vorhersagen die Validierung nicht (535 - nein) so wird in einem Schritt 535 zum Schritt 520 zurückverzweigt, um das ML-Modell zum Zwecke seiner Verbesserung weiter mit zusätzlichen Trainingsdaten TD zu trainieren.

Andernfalls (535 - ja) kann der operative Einsatz des nunmehr trainierten und validierten ML-Modells 710 beginnen. Dazu werden neuen Input-Daten ND genutzt, die Zustandsdaten und Prozesskonfigurationsdaten aufweisen, die aus einem Erfassungszeitraum, insbesondere einem fortlaufend gleitenden Erfassungszeitraum w_{g}, während der Ausführung des Prozesses 140 stammen. Anfänglich können die neuen Daten auch noch aus den Validierungsdaten VD entnommen sein. In dem Erfassungszeitraum wird dabei eine Abfolge von Zeitabschnitten betrachtet, innerhalb derer die Prozesskonfiguration (z.B. historische Centerline) jeweils konstant geblieben war. Auf Basis der zugehörigen Inputdaten wird nun zu jedem der Zeitabschnitte der Wert zumindest eines ausgewählten KPI vorhergesagt, beispielsweise der über einen auf den jeweiligen Zeitabschnitt folgenden Vorhersagezeitraum w_{P} (z.B. y Stunden lang) gemittelte Wert (OEE) oder der entsprechend gemittelte Wert (DT) einer Anlagen- bzw. Prozessausfallzeit DT.

Bei dem Verfahren 500 wird nun in einem weiteren Schritt 545 aus diesem zeitlichen Verlauf des Werts des KPI im Vorhersagezeitraum sein Maximum, insbesondere sein absolutes Maximum, bestimmt. In einem weiteren Schritt 550 wird aus dem gefundenen Maximum auf den gesuchten Satz PP1 von vorläufigen Soll-Prozesskonfigurationsparametern geschlossen, indem aus der während des Erfassungszeitraums aufgetretenen Abfolge von Prozesskonfigurationen derjenige Satz der Prozesskonfigurationsparameter dafür ausgewählt wird, der an dem diesem Maximum zugeordneten Zeitpunkt im Erfassungszeitraum galt. In Fig. 7(c) entspricht dies dem Satz PP1 von Prozesskonfigurationsparametern, der zu dem mit einem Sternchen markierten, absoluten Maximum des KPI (OEE) gehört.

Das Verfahren 500 kann im Falle mehrerer KPI dahingehend verallgemeinert werden, dass zur Bestimmung des Maximums der zeitliche Verlauf einer bestimmten Funktion betrachtet wird, welche die KPIs als Argumente hat.

Das in **Fig. 6** illustrierte weitere ML-basierte Verfahren 600 stellt eine Weiterbildung des Verfahrens 500 dar, bei dem es ebenfalls darum geht, eine optimale Prozesskonfiguration beim Vorhandensein eines Satzes aus mehreren KPI zu finden. Die Verfahrensschritte 605-640 des Verfahrens 600 entsprechen dabei den Verfahrensschritten 505-540 des Verfahrens 500, wobei im Schritt 540 statt einem nun mehrere KPIs betrachtet werden.

Im Unterschied zum Verfahren 500, werden nun in einem weiteren Schritt 645, soweit vorhanden, mehrere Maxima im zeitlichen Verlauf eines über den jeweiligen Vorhersagezeitraum gemittelten Werts eines Leit-KPl, der insbesondere die gemittelte OEE sein kann, bestimmt. Falls nur ein Maximum in den zeitlichen Verlauf auftritt, wird nur dieses bestimmt.

Sodann wird im Schritt 650 dasjenige der Maxima ausgewählt, dessen zugehöriger Vorhersagezeitraum W_{P} den im Sinne des Optimierungsziels besten gemittelten Wert für eine bestimmte Funktion (Metrik) des Satzes der KPls aufweist. Im Schritt 655 wird nun der Satz der Prozesskonfigurationsparameter, während des diesem Maximum zugeordneten Erfassungszeitraums W_{g} galten, als aus dem Berechnungsverfahren 600 resultierender Satz PP2 von vorläufigen Soll-Prozesskonfigurationsparametern ausgewählt.

**In** **Fig. 7 (c)** ist dies im Hinblick auf zwei KPI, nämlich zum einen die gemittelte (OEE) und zum anderen die gemittelte Ausfallzeit (DT) des Prozesses 140 bzw. der Anlage 135, illustriert. Zwar liegt hier das absolute Maximum der gemittelten (OEE) im Vorhersagezeitraum W_{P}=W₃, wenn aber das Optimum unter Einbeziehung auch des zweiten KPI (DT) bestimmt wird, dann liegt dieses in dem mit einer Raute markierten im Vorhersagezeitraum W_{P}=W₂, da dort die gemittelte Ausfallzeit (DT) geringer ist als im Vorhersagezeitraum W₃, während der Wert von (OEE) nur geringfügig niedriger ist. Folglich wird hier als der aus dem Verfahren 600 resultierende Satz vorläufiger Soll-Prozesskonfigurationsparameter der Satz PP2 von Prozesskonfigurationsparametern gewählt, der aus dem zu dem Vorhersagezeitraum W₂ korrespondierenden Erfassungszeitraum W_{g} stammt.

Während unter Bezugnahme auf die Figuren 5 bis 7 vorausgehend zwei verschiedene ML-basierte Berechnungsverfahren vorgestellt wurden, gibt es auch andere Möglichkeiten, verschiedene ML-basierte Berechnungsverfahren zu nutzen. Insbesondere können sie auf verschiedenen ML-Modellen beruhen, die sich insbesondere in ihrem Modell-Typ (z.B. neuronales Netz oder entscheidungsbaumbasiert), ihren Hyperparametern oder den zu ihrem Training verwendeten Trainingsdaten unterscheiden können.

Um eine fortlaufende Prozessoptimierung zu erreichen, können die ML-Modelle auch stets iterativ weitertrainiert werden, wozu insbesondere die wiederholt, insbesondere fortlaufend, während der Ausführung des Prozesses 140 gewonnenen Ist-Werte für die Input-Daten und dazu korrespondierenden resultierenden KPI genutzt werden können.

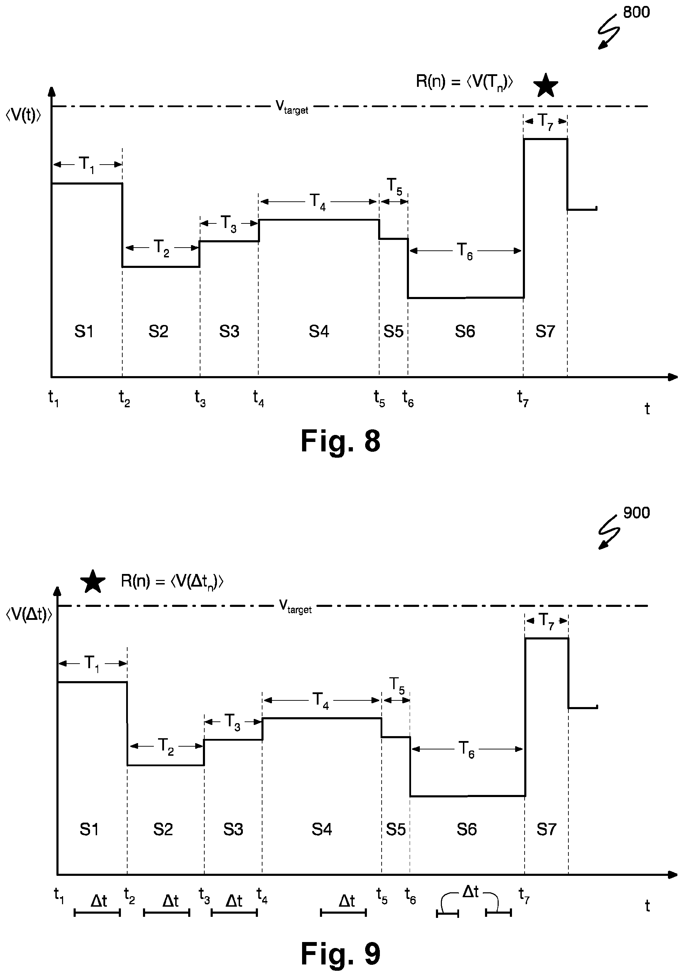

Unter Bezugnahme auf die **Figuren 8 bis 10** werden nun drei verschiedene, beispielhafte, nicht-ML-basierte Berechnungsverfahren 800, 900 und 1000, die im Rahmen des Verfahrens 300 zusätzlich zu einem oder mehreren ML-basierten Berechnungsverfahren 500 bzw. 600 eingesetzt werden können, erläutert.

Das Berechnungsverfahren 800 ist in **Fig. 8** illustriert. Dabei wird der in den Input-Daten repräsentierte historische zeitliche Verlauf einer während einer Ausführung des Prozesses 140 auftretenden und dessen Verlauf abhängigen und die Metrik (z.B. OEE) direkt oder indirekt beeinflussenden Messgröße betrachtet. Der Verlauf der Messgröße wird auf solche Weise segmentiert, d.h. in (hier beispielhaft sieben) verschiedene Zeitabschnitte (Segmente) S1 bis S7 untergeteilt, dass jedes Segment einen Zeitabschnitt dieses zeitlichen Verlaufs definiert, innerhalb dessen der Wert der Messgröße innerhalb eines vorbestimmten begrenzten Toleranzbereichs um den Startwert oder Mittelwert der Messgröße im Zeitabschnitt verbleibt (z.B. Startwert +/- x%). Ein Segmentwechsel zu einem anderen Segment tritt dagegen auf, wenn der Wert diesen begrenzten Toleranzbereich verlässt. Insbesondere im Falle, dass die Messgröße nur diskrete Werte annehmen kann, kann die Länge des Toleranzbereichs auf null gesetzt werden oder dessen Verwendung ganz entfallen.

In Fig. 8 wird beispielhaft als Messgröße der über das jeweilige Segment gemittelte Durchschnittswert (V(t)) einer Produkt-Durchsatzrate V(t) des Prozesses 140 verwendet. Aufgrund der vorgenannten Segmentdefinition ist die Produkt-Durchsatzrate V(t) innerhalb jedes der Segmente S1 bis S7 im Wesentlichen konstant und entspricht somit auch dem Durchschnittswert (V(t)) oder liegt zumindest gegebenenfalls innerhalb des Toleranzbereichs um den Durchschnittswert 〈V(t)〉. Die Segmente S1 bis S7 können dabei untereinander eine unterschiedliche Zeitdauer Tₙ, mit n = 1, 2, ...7, aufweisen. Zu den den Startzeitpunkten der jeweiligen Segmente entsprechenden Zeitpunkten tₙ treten aufgrund entsprechender ausreichend großer Änderungen der Produkt-Durchsatzrate V(t) Segmentwechsel auf. Mit V_{target} sei hier eine angestrebte maximale Produkt-Durchsatzrate bezeichnet.

Im Rahmen des Verfahrens 800 wird nun der dabei zu bestimmende Satz PP3 der zugehörigen vorläufigen Soll-Prozesskonfigurationsparameter wie folgt bestimmt: Es wird als Optimierungsgröße R(n) der zugehörige Durchschnittswert (V(t)) innerhalb der Zeitdauer Tₙ des Segments n festgelegt. Aus der Menge der Segmente S1 bis S7 wird sodann dasjenige Segment bestimmt, dessen Wert R(n) optimal, hier insbesondere maximal, ist. Im vorliegenden Beispiel der Fig. 8 ist dies das mit einem Sternchen markierte Segment S7 mit der Zeitdauer T₇. Der gesuchte Satz PP3 der vorläufigen Soll-Prozesskonfigurationsparameter aus dem Verfahren 800 wird nun als der Satz derjenigen Ist-Prozesskonfigurationsparametern bestimmt, gemäß denen der Prozess während des Zeitraums T₇ oder zum Zeitpunkt t₇ gerade konfiguriert wurde.

Alternativ zur Verwendung der Produkt-Durchsatzrate V(t) als Messgröße und somit zur Definition der Segmente, kann insbesondere bei den Verfahren 800 und 900 die Prozesskonfiguration, d.h. der während der Prozessausführung typischerweise zeitlich variable Satz der Prozesskonfigurationsparameter selbst als Messgröße verwendet werden. Innerhalb eines Segments bleibt der Satz der Prozesskonfigurationsparameter somit konstant, während bei einer Änderung zumindest eines der Prozesskonfigurationsparameter, bzw. bei einer Änderung aus einem gegebenenfalls definierten Toleranzbereich hinaus, ein Segmentwechsel auftritt.

In **Fig. 9** ist ein zweites beispielhaftes Nicht-ML-basiertes Berechnungsverfahren 900 illustriert. Es unterscheidet sich von dem Berechnungsverfahren 800 insbesondere dadurch, dass anstelle des über die jeweilige Segmentdauer Tₙ ermittelten Durchschnittswerts 〈V(t)〉ₙ die Optimierungsgröße R(n) nun so definiert ist, dass der Wert von R (n) für dasjenige Segment Sₙ maximal ist für das der über einen vorbestimmten kumulierten Zeitraum Δt bestimmter Dauer (z.B. 60 Minuten) innerhalb des Segments ermittelte Durchschnittswert 〈V(Δt)〉ₙ der Durchsatzrate im Quervergleich unter allen Segmenten maximal ist. Innerhalb eines Segments kann der kumulierte Zeitraum Δt auch aus mehreren zeitlich separierten Zeitabschnitten bestehen, wie in Fig. 9 für das Segment S6 dargestellt.

Bei dem Verfahren 900 kann insbesondere davon auftreten, dass die Zeitdauer eines Segments kürzer ist als der Zeitraum Δt, sodass solche kurzen Segmente bei der Optimierung ausscheiden. In Fig. 9 weist beispielsweise das Segment S7 mit n=7 zwar den höchsten Wert für die Optimierungsgröße R(n) auf, da es jedoch kürzer ist als der Zeitraum Δt wird es bei der Optimierung nicht berücksichtigt, sodass stattdessen das mit einem Sternchen markierte Segment S1 als optimales Segment ausgewählt wird und somit dessen der Satz der zugeordnete Prozesskonfigurationsparameter als Satz PP4 der zu bestimmenden Soll-Prozesskonfigurationsparametern festgelegt wird.

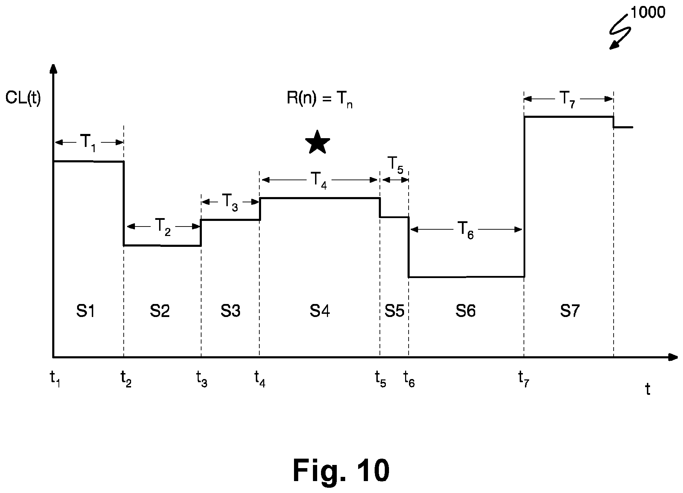

In **Fig. 10** ist ein drittes beispielhaftes Nicht-ML-basiertes Berechnungsverfahren 1000 illustriert. Es unterscheidet sich von den Berechnungsverfahren 800 und 900 insbesondere dadurch, dass hier die Segmente so definiert sind, dass (i) innerhalb eines Segments der Satz der Prozesskonfigurationsparameter konstant (bzw. innerhalb eines Toleranzbereichs) bleibt, während bei einer Änderung zumindest eines der Prozesskonfigurationsparameter, bzw. bei einer Änderung aus dem gegebenenfalls definierten Toleranzbereich hinaus, ein Segmentwechsel auftritt. Somit ist die Dauer Tₙ eines Segments dadurch bestimmt, wie lange ein und derselbe Satz von Prozesskonfigurationsparametern innerhalb des betrachteten Werteverlaufs der Prozesskonfigurationsparametern (historische Centerline CL(t)) vorlag (gegebenenfalls innerhalb des Toleranzbereichs).

Als Optimierungsgröße R(n) wird hier diese Segmentdauer Tₙ genutzt. Es wird somit dasjenige der Segmente als optimales Segment ausgewählt, dessen Segmentdauer Tₙ maximal ist. Das Verfahren 1000 kann dahingehend verallgemeinert werden, dass die Segmentdauer innerhalb des Erfassungszeitraums für die Input-Daten kumulativ definiert wird, als die Summe der einzelnen Segmentlängen solcher verschiedenen Segmente innerhalb des Erfassungszeitraums, die untereinander denselben Satz von Prozesskonfigurationsparametern (gegebenenfalls innerhalb des Toleranzbereichs) aufweisen. Dieser Satz wird sodann als Satz PP5 der im Rahmen des Verfahrens 1000 zu bestimmenden Soll-Prozesskonfigurationsparameter festgelegt.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand sowie seinen rechtlichen Äquivalenten abgewichen wird.

### BEZUGSZEICHENLISTE

- 100: Übersichtsdarstellung technische Anlage und Optimierungsprozess
- 105: Optimierungsprozess
- 110: Anlagensteuerungsvorrichtung
- 115, HPD: historische Prozesskonfigurationsdaten
- 120, SD: Zustandsdaten
- 125, PD: Produktionsdaten
- 130, CL: (Satz von) Soll-Prozesskonfigurationsparameter(n), Centerline bzw. Mittelinie
- 135: technische Anlage 135
- 140: Prozess zur Herstellung oder Bearbeitung von Produkten
- 145a-c: Fördereinrichtungen
- 150: erste Bearbeitungsstation, z.B. zur mechanischen Bearbeitung
- 155: zweite Bearbeitungsstation, z.B. zur thermischen Bearbeitung
- 160: dritte Bearbeitungsstation, z.B. zur chemischen Bearbeitung
- 165a-c: Sensoren für Position, Orientierung, Zustand oder sonstige Eigenschaft der Ausgangsstoffe/-produkte A, Zwischenprodukte ZP1, ZP2 oder Endprodukte P
- 170a-c: Sensoren für Zustände, insbesondere Maschinenzustände, der Bearbeitungsstationen oder sonstiger Teile der Anlage 135
- 175: Cloud
- 200: Satz von Zustandsparametern
- 205: verschiedene diskrete Konfigurationsmöglichkeiten, d. h. Parameterwerte der Anlage
- 210: Mittellinie bzw. Centerline
- 300: beispielhafte Ausführungsform des Verfahrens zur Prozessoptimierung unter Nutzung einer Ensemblemethode
- 305-355: Schritte des Verfahrens 300
- 400: Tabelle zur Erläuterung einer beispielhaftem Ensemblemethode für das Verfahren 300 aus Fig. 3
- 500: erstes ML-basiertes Berechnungsverfahren
- 505-550: Schritte des Verfahrens 300
- 600: zweites ML-basiertes Berechnungsverfahren
- 605-650: Schritte des Verfahrens 600
- 700: Illustration zur Erläuterung der Verfahren 500 und 600
- 800: erstes nicht-ML-Berechnungsverfahren
- 900: zweites nicht-ML-Berechnungsverfahren
- 1000: drittes nicht-ML-Berechnungsverfahren

- A: Ausgangsstoffe oder Ausgangsprodukte
- DT: Ausfallzeit (Downtime)
- K: Anzahl gleicher Parameterwerte für einen Prozesskonfigurationsparameter im Quervergleich unter verschiedenen Berechnungsverfahren
- KPI: Leistungskennzahl, (engl. "key performance indicator")
- M: Anzahl von Prozesskonfigurationsparametern
- N: Anzahl von Zustandsparametern
- n: Segementindex
- ND: neue (Input-)Daten
- OEE: Gesamtanlageneffektivität (engl. "Overall Equipment Effectiveness")
- P: aus Prozess 140 resultierende Produkte, insbes. Endprodukte
- R(n): Optimierungsgröße bei nicht-ML-Berchnungsverfahren
- SP1,... ,SP7: Prozesskonfigurationsparameter (Setpoints)
- t: Zeit
- tₙ: Startzeitpunkt des Segments n
- Tₙ: Zeitdauer des Segments n
- TD: Trainingsdaten
- V(t): Durchsatzrate
- VD: Validierungsdaten
- ZP1: Zwischenprodukte nach erster Bearbeitungsstation 150
- ZP2: Zwischenprodukte nach zweiter Bearbeitungsstation 155

## Patentansprüche

1. Verfahren (105; 300) zum automatisierten Bestimmen einer optimierten Prozesskonfiguration eines mittels einer technischen Anlage ausführbaren und mittels einer Anzahl M>1 verschiedener Prozesskonfigurationsparameter (SP1,...,SP7) konfigurierbaren Prozesses zur Herstellung oder Bearbeitung von Produkten, wobei das Verfahren (105; 300) aufweist:
Erfassen von historischen Prozesskonfigurationsdaten (115, HPD), die für eine Mehrzahl von verschiedenen gegenwärtigen oder vergangenen Zeitpunkten oder Zeiträumen während zumindest einer Ausführung des Prozesses die dabei jeweils genutzte tatsächliche Prozesskonfiguration des Prozesses anhand von diese jeweilige Prozesskonfiguration definierenden Ist-Werten der Prozesskonfigurationsparameter repräsentieren;
Erfassen von Zustandsdaten (120, SD), die für jeden der gegenwärtigen oder vergangenen Zeitpunkte bzw. Zeiträume jeweils einen zugehörigen jeweiligen tatsächlichen Ist-Betriebszustand der Anlage mittels jeweiliger Ist-Werte einer Anzahl N>1 von verschiedenen Zustandsparametern (200) der Anlage repräsentieren;
Erfassen von Produktionsdaten (125, PD), die zumindest eine durch den Prozess beeinflussbare Soll-Eigenschaft der aus dem Prozess resultierenden Produkte oder zumindest eine Ist- oder Soll-Eigenschaft zumindest eines dazu eingesetzten Ausgangsstoffes (A) oder Ausgangsprodukts (A) repräsentieren;
Bestimmen einer im Hinblick auf eine definierte Metrik hin optimierten und durch jeweilige Soll-Werte der Prozesskonfigurationsparameter definierten Prozesskonfiguration des Prozesses unter Verwendung eines an den Prozess angepassten und dabei zumindest teilweise auf maschinellem Lernen beruhenden Optimierungsverfahrens unter Verwendung von Inputdaten, welche die Produktionsdaten (125, PD) sowie von durch die historischen Prozesskonfigurationsdaten (115, HPD) und die Zustandsdaten (120, SD) gegebenen oder daraus abgeleiteten Merkmalen umfassen; und
Ausgeben von Soll-Prozesskonfigurationsdaten, welche die bestimmte optimierte Prozesskonfiguration mittels der Soll-Werte der Prozesskonfigurationsparameter repräsentieren;
wobei das Verfahren (105; 300) des Weiteren zumindest einen der folgenden Schritte aufweist:
- Automatisches Einstellen der Anlage mit den ausgegebenen Soll-Prozesskonfigurationsdaten, um die Anlage zu konfigurieren, den Prozess gemäß der optimierten Prozesskonfiguration ausführen zu können;
- Automatisches Steuern der Anlage zur Ausführung des Prozesses gemäß der durch die ausgegebenen Soll-Prozesskonfigurationsdaten definierten optimierten Prozesskonfiguration; und
wobei die Metrik so definiert ist oder wird, dass sie eines der folgenden Optimierungsziele für den Prozess oder eine bestimmte Kombination von zwei oder mehr dieser Optimierungsziele quantifiziert:
- Verringerung der Prozessvariabilität des Prozesses;
- Verringerung der Produktvariabilität der aus der Durchführung des Prozesses resultierenden Produkte;
- Erhöhung der Effizienz und/oder Effektivität des Prozesses, wobei die Erhöhung der Effizienz und/oder Effektivität des Prozesses eine der folgenden Größen oder eine Kombination aus zumindest zwei solcher Größen angibt:
(i) eine Durchsatzrate des Prozesses;
(ii) eine Verfügbarkeit des Prozesses;
(iii) eine Quantität der hergestellten oder bearbeiteten Produkte;
(iv) eine Qualität der hergestellten oder bearbeiteten Produkte.

2. Verfahren (105; 300) nach Anspruch 1, wobei die Input-Daten zeitabhängig sind und das Verfahren (105; 300) während einer Ausführung des Prozesses wiederholt durchgeführt wird, um dynamisch auf Basis der Input-Daten Soll-Prozesskonfigurationsdaten zu bestimmen und auszugeben.

3. Verfahren (105; 300) nach einem der vorausgehenden Ansprüche, wobei das Ausgeben der Soll-Prozesskonfigurationsdaten zumindest einen der folgenden Schritte aufweist:
- Bereitstellen der Soll-Prozesskonfigurationsdaten an einer Datenschnittstelle der Anlage;
- Übermitteln der Soll-Prozesskonfigurationsdaten über eine Kommunikationsstrecke an einen entfernten Datenempfänger;
- Ausgeben oder Veranlassen eines Ausgebens der Soll-Prozesskonfigurationsdaten in menschenlesbarer Form an einer Mensch-Maschine-Schnittstelle.

4. Verfahren (105; 300) nach einem der vorausgehenden Ansprüche, wobei die Zustandsparameter so ausgewählt sind oder werden, dass sie einzeln oder kumulativ einen oder mehrere der folgenden tatsächlichen Ist-Betriebszustände der Anlage für den zumindest einen gegenwärtigen oder früheren Zeitpunkt bzw. Zeitraum repräsentieren:
- Durchsatzrate (V(t)) oder Quantität, insbesondere Mindestdurchsatzrate bzw. -qualität, der hergestellten oder bearbeiteten Produkte, insbesondere auf die gesamte Anlage bzw. den gesamten Prozess oder auf einen oder mehrere einzelne Anlagenabschnitte bzw. Prozessabschnitte bezogen;
- Fehlerrate, Fehlerquantität oder Fehlerart von beim Prozessablauf aufgetretenen Fehlern, insbesondere ausweislich von aufgetretenen Fehler- oder Alarmmeldungen oder Quantitäten oder Mengen von fehlerhaften Produkten aus dem Prozess;
- Jeweilige Betriebsgeschwindigkeit, insbesondere maximale aufgetretene Betriebsgeschwindigkeit, zumindest eines beweglichen Teils der Anlage;
- Eine oder mehrere Durchsatzverlustzeiten oder Zeitpunkte oder Zeitdauern, an den bzw. während derer eine reduzierte Leistungsfähigkeit oder ein Stillstand, insbesondere ein Ausfall, der Anlage aufgetreten ist;
- Informationen oder Kennungen von Gründen die zu einer reduzierten Leistungsfähigkeit oder zu einem Stillstand der Anlage führten.
- Zeitpunkte, insbesondere Ist-Zeitpunkte oder geplante Zeitpunkte, für den Start oder ein Ende des Prozessbetriebs
- Datentypen oder Formate der Input-Daten oder ausgegebenen Daten, insbesondere zur Darstellung der Soll-Prozesskonfigurationsparameter.

5. Verfahren (105; 300) nach einem der vorausgehenden Ansprüche, wobei die Produktionsdaten (125, PD) so ausgewählt sind oder werden, dass sie eine oder mehrere der folgenden Soll-Eigenschaften der aus dem Prozess zu erhaltenden Produkte oder zumindest eines dazu eingesetzten Ausgangsstoffes (A) oder Ausgangsprodukts (A) repräsentieren:
- Art, Typ, Qualität oder ausgewählte physikalische oder chemische Eigenschaften der eingesetzte Ausgangsstoffe (A) oder Ausgangsprodukte (A) ;
- Form oder Art der Bereitstellung der eingesetzten Ausgangsstoffe (A) oder Ausgangsprodukte (A) ;
- Art, Typ, Qualität oder ausgewählte physikalische oder chemische Soll-Eigenschaften der aus dem Prozess zu erhaltenden Produkte;
- Form oder Art der Bereitstellung der aus dem Prozess zu erhaltenden Produkte.

6. Verfahren (105; 300) nach einem der vorausgehenden Ansprüche, wobei die Anzahl M der Prozesskonfigurationsparameter und die Anzahl N der Zustandsparameter so gewählt sind oder werden, dass N+M ≥ 10 gilt.

7. Verfahren (105; 300) nach einem der vorausgehenden Ansprüche, wobei das Optimierungsverfahren aufweist:
Mehrfaches Berechnen einer im Hinblick auf die Metrik hin optimierten und dabei mittels eines jeweiligen zu bestimmenden Satzes von vorläufigen Soll-Prozesskonfigurationsparametern (PP1,...,PP5) repräsentierten Prozesskonfiguration des Prozesses, wobei jedes Berechnen mittels eines jeweiligen Berechnungsverfahrens aus einem Ensemble von mehreren zueinander alternativen Berechnungsverfahren (500, 600, 800, 900, 1000) und jeweils unter Verwendung von Merkmalen aus den Input-Daten erfolgt, wobei zumindest eines der Berechnungsverfahren (500, 600) des Ensembles unter Verwendung von maschinellem Lernen an den Prozess angepasst ist oder wird; und
Festlegen der Soll-Prozesskonfigurationsparameter (130, CL) auf Basis eines ausgewählten Satzes aus der Menge der Sätze von vorläufigen Soll-Prozesskonfigurationsparametern (PP1,...,PP5), wobei diese Auswahl so erfolgt, dass der ausgewählte Satz ein vorbestimmtes Bewertungskriterium für die Sätze von allen Sätzen am besten erfüllt.

8. Verfahren (105; 300) nach Anspruch 7, wobei:
das Bewertungskriterium in Abhängigkeit davon definiert ist oder wird,
- für welchen Satz der vorläufigen Soll-Prozesskonfigurationsparameter (PP1,...,PP5) die Metrik am besten erfüllt wurde; oder
- für welche Anzahl der Prozesskonfigurationsparameter des Satzes gilt, dass ihr jeweiliger Wert im Quervergleich unter Verwendung eines Ähnlichkeitsmaßes innerhalb der Menge der jeweiligen Werte für diesen Prozesskonfigurationsparameter aus allen Sätzen von vorläufigen Soll-Prozesskonfigurationsparametern (PP1,...,PP5) am relativ häufigsten vorkommt, wobei jeder Satz von Prozesskonfigurationsparametern das Bewertungskriterium um so besser erfüllt, je höher diese Anzahl für diesen Satz ist.

9. Verfahren (105; 300) nach Anspruch 7 oder 8, wobei zumindest eines der Berechnungsverfahren (500, 600, 800, 900, 1000) des Ensembles kein maschinen-lernen-basiertes Berechnungsverfahren (800, 900, 1000) ist.

10. Verfahren (105; 300) nach Anspruch 9, wobei zumindest eines der Berechnungsverfahren (800, 900, 1000) des Ensembles, welches kein maschinen-lernen-basiertes Berechnungsverfahren (800, 900, 1000) ist, aufweist:
Segmentieren des während einer Ausführung des Prozesses auftretenden zeitlichen Verlaufs einer vom Prozessverlauf abhängigen und die Metrik direkt oder indirekt beeinflussenden Messgröße auf solche Weise, dass jedes Segment einen Zeitabschnitt dieses zeitlichen Verlaufs definiert, innerhalb dessen der Wert der Messgröße innerhalb eines vorbestimmten begrenzten Toleranzbereichs um den Startwert oder Mittelwert der Messgröße verbleibt, und ein Segmentwechsel zu einem anderen Segment auftritt, wenn der Wert diesen begrenzten Wertebereich verlässt;
Bestimmen der vorläufigen Soll-Prozesskonfigurationsparameter (PP1,...,PP5) des diesem Berechnungsverfahren (500, 600, 800, 900, 1000) zugeordneten Satzes von vorläufigen Soll-Prozesskonfigurationsparametern (PP1,...,PP5) so, dass die vorläufigen Soll-Prozesskonfigurationsparameter (PP1,...,PP5) des Satzes in Abhängigkeit von denjenigen Ist-Prozesskonfigurationsparametern bestimmt werden, gemäß denen der Prozess während desjenigen der Segmente konfiguriert war, bei dem der Wert der Messgröße im Quervergleich unter allen Segmenten eine definierte Optimierungsgröße optimiert hat.

11. Verfahren (105; 300) nach Anspruch 10, wobei die Optimierungsgröße als oder in Abhängigkeit einer der folgenden Größen definiert ist oder wird:
- Durchschnittswert der Messgröße während des jeweiligen Segments;
- Durchschnittswert der Messgröße während eines bestimmten zusammenhängenden oder kumulierten in dem jeweiligen Segment liegenden Zeitraums einer für alle Segmente gleichen definierten Dauer T, wobei der jeweilige Zeitraum innerhalb eines Segments so gewählt wird, dass er innerhalb des Segments die Messgröße im Quervergleich unter mehreren möglichen Zeiträumen der Dauer T innerhalb des Segments optimiert;
- Segmentdauer.

12. Verfahren (105; 300) nach einem der vorausgehenden Ansprüche, wobei das Optimierungsverfahren zumindest ein an den Prozess angepasstes und dabei auf maschinellem Lernen, ML, beruhendes Berechnungsverfahren Berechnungsverfahren (500, 600) aufweist, bei dem ein ML-Modell zum Einsatz kommt, das Merkmale aus den Input-Daten als Input verwendet und einen Wert für die Metrik als Output liefert.

13. Verfahren (105; 300) nach Anspruch 12, wobei für zumindest einen der mittels der Input-Daten als Prozesskonfigurationsparameter oder Zustandsparameter zur Verfügung gestellten Parameter für ein definiertes mit der Zeit gleitendes Zeitfenster zumindest eine der folgenden Größen oder zumindest eine davon abhängige Größe bestimmt und von dem ML-Modell als Merkmal verwendet wird:
- der gleitende Mittelwert der jeweiligen Ist-Werte des Parameters, deren zugeordneten Zeitpunkte oder Zeiträume innerhalb des Zeitfensters liegen;
- ein exponentiell gewichteter gleitender Mittelwert der jeweiligen Ist-Werte des Parameters, deren zugeordneten Zeitpunkte oder Zeiträume innerhalb des Zeitfensters liegen, wobei die Gewichtung mittels einer Exponentialfunktion so erfolgt, das die Ist-Werte zu jüngeren Zeitpunkten gegenüber den Ist-Werten älterer Zeitpunkte höher gewichtet werden;
- der gleitende Mittelwert der Standardabweichung der Verteilung der Ist-Werte des Parameters, deren zugeordneten Zeitpunkte oder Zeiträume innerhalb des Zeitfensters liegen;
- Die Anzahl der Änderungen des Ist-Werts des Parameters innerhalb des Zeitfensters;
- Die auf eine definierte Zeitspanne bezogene maximale Anzahl der Änderungen des Ist-Werts des Parameters innerhalb des Zeitfensters;
- Die kumulierte absolute Dauer oder auf die Dauer des Zeitfenster bezogene relative Dauer derjenigen Zeiträume, während denen gemäß den Ist-Werten des Parameters der Prozess angehalten bzw. die Anlage ausgefallen war oder stillgestanden hatte;
- Eine zu einem Wert des Parameters korrespondierende und diesen Wert charakterisierende numerische Größe, wenn dieser Parameter an sich eine nicht-nummerische Größe charakterisiert.

14. Verfahren (105; 300) nach einem der vorausgehenden Ansprüche, wobei das Verfahren zum Optimieren einer variablen parametrisierten Prozesskonfiguration einer technischen Anlage zur Herstellung oder Bearbeitung von Produkten zumindest einer der folgenden Produktarten eingesetzt wird:
- Produkte, die Material aus Papier, Karton oder Pappe aufweisen;
- Folien;
- Lebensmittel;
- Stahl;
- Tabak;
- Textilien;
- Pharmazeutika.

15. Anlagensteuerungssystem (110), das konfiguriert ist, einen zur Ausführung auf einer technischen Anlage ablauffähigen Prozess zur Herstellung oder Bearbeitung von Produkten nach dem Verfahren (105; 300) nach einem der vorausgehenden Ansprüche gemäß der optimierten Prozesskonfiguration zu konfigurieren bzw. zu steuern.

16. Computerprogramm umfassend Befehle, die bewirken, dass ein Anlagensteuerungssystem (110) nach Anspruch 15 das Verfahren (105; 300) nach einem der Ansprüche 1 bis 14 ausführt.

## Claims

1. Method (105; 300) for the automated determination of an optimized process configuration of a process for producing or processing products, which process can be carried out by means of a technical plant and can be configured by means of a number M>1 of different process configuration parameters (SP1, ..., SP7), the method (105; 300) comprising:
acquiring historical process configuration data (115, HPD) which, for a plurality of different current or past points in time or time periods during at least one execution of the process, represent the actual process configuration of the process used in each case on the basis of actual values of the process configuration parameters defining this respective process configuration;
acquiring state data (120, SD) which, for each of the current or past points in time or time periods, in each case represent an associated respective actual operating state of the plant by means of respective actual values of a number N>1 of different state parameters (200) of the plant;
acquiring production data (125, PD) which represent at least one target property, which can be influenced by the process, of the products resulting from the process or at least one actual or target property of at least one starting material (A) or starting product (A) used for this purpose;
determining a process configuration of the process, which process configuration is optimized with regard to a defined metric and is defined by respective target values of the process configuration parameters, using an optimization method which is adapted to the process and in this case is based at least partially on machine learning, using input data which comprise the production data (125, PD) and features which are given by the historical process configuration data (115, HPD) and the state data (120, SD) or are derived therefrom; and
outputting target process configuration data which represent the determined optimized process configuration by means of the target values of the process configuration parameters;
wherein the method (105; 300) further comprises at least one of the following steps:
- automatically setting the plant with the output target process configuration data in order to configure the plant to be able to carry out the process in accordance with the optimized process configuration;
- automatically controlling the plant for carrying out the process in accordance with the optimized process configuration defined by the output target process configuration data; and
wherein the metric is or is defined such that it quantifies one of the following optimization objectives for the process or a particular combination of two or more of these optimization objectives:
- reducing the process variability of the process;
- reducing the product variability of the products resulting from the performance of the process;
- increasing the efficiency and/or effectiveness of the process, wherein the increase in the efficiency and/or effectiveness of the process indicates one of the following variables or a combination of at least two of such variables:
(i) a throughput rate of the process;
(ii) an availability of the process;
(iii) a quantity of the produced or processed products;
(iv) a quality of the produced or processed products.

2. Method (105; 300) according to Claim 1, wherein the input data are timedependent and the method (105; 300) is carried out repeatedly during an execution of the process in order to determine and output target process configuration data dynamically on the basis of the input data.

3. Method (105; 300) according to any one of the preceding claims, wherein the outputting of the target process configuration data comprises at least one of the following steps:
- providing the target process configuration data at a data interface of the plant;
- transmitting the target process configuration data via a communication link to a remote data receiver;
- outputting or causing an outputting of the target process configuration data in human-readable form at a human-machine interface.

4. Method (105; 300) according to any one of the preceding claims, wherein the state parameters are selected such that they individually or cumulatively represent one or more of the following actual operating states of the plant for the at least one current or earlier point in time or time period:
- throughput rate (V(t)) or quantity, in particular minimum throughput rate or quantity, of the produced or processed products, in particular related to the entire plant or the entire process or to one or more individual plant sections or process sections;
- error rate, error quantity or error type of errors which have occurred during the execution of the process, in particular according to error or alarm messages which have occurred or quantities or quantities of faulty products from the process;
- respective operating speed, in particular maximum operating speed which has occurred, of at least one movable part of the plant;
- one or more throughput loss times or points in time or time periods at which or during which a reduced performance or a standstill, in particular a failure, of the plant has occurred;
- information or identifiers of reasons which led to a reduced performance or to a standstill of the plant.
- points in time, in particular actual points in time or planned points in time, for the start or an end of the process operation
- data types or formats of the input data or output data, in particular for representing the target process configuration parameters.

5. Method (105; 300) according to any one of the preceding claims, wherein the production data (125, PD) are selected such that they represent one or more of the following target properties of the products to be obtained from the process or at least one starting material (A) or starting product (A) used for this purpose:
- kind, type, quality or selected physical or chemical properties of the starting materials (A) or starting products (A) used;
- form or kind of provision of the starting materials (A) or starting products (A) used;
- kind, type, quality or selected physical or chemical target properties of the products to be obtained from the process;
- form or kind of provision of the products to be obtained from the process.

6. Method (105; 300) according to any one of the preceding claims, wherein the number M of process configuration parameters and the number N of state parameters are selected such that N+M ≥ 10.

7. Method (105; 300) according to any one of the preceding claims, wherein the optimization method comprises:
multiple calculation of a process configuration of the process, which process configuration is optimized with regard to the metric and in this case is represented by means of a respective set of preliminary target process configuration parameters (PP1, ..., PP5) to be determined, wherein each calculation is carried out by means of a respective calculation method from an ensemble of a plurality of mutually alternative calculation methods (500, 600, 800, 900, 1000) and in each case using features from the input data, wherein at least one of the calculation methods (500, 600) of the ensemble is adapted to the process using machine learning; and
definition of the target process configuration parameters (130, CL) on the basis of a selected set from the set of sets of preliminary target process configuration parameters (PP1, ..., PP5), wherein this selection is carried out such that the selected set best meets, of all sets, a predetermined evaluation criterion for the sets.

8. Method (105; 300) according to Claim 7, wherein:
the evaluation criterion is or is defined depending on
- for which set of the preliminary target process configuration parameters (PP1, ..., PP5) the metric was best met; or
- for which number of process configuration parameters of the set it applies that their respective value occurs relatively most frequently in cross-comparison using a similarity measure within the set of the respective values for this process configuration parameter from all sets of preliminary target process configuration parameters (PP1, ..., PP5), wherein each set of process configuration parameters meets the evaluation criterion the better the higher this number is for this set.

9. Method (105; 300) according to Claim 7 or 8, wherein at least one of the calculation methods (500, 600, 800, 900, 1000) of the ensemble is not a machine-learning-based calculation method (800, 900, 1000).

10. Method (105; 300) according to Claim 9, wherein at least one of the calculation methods (800, 900, 1000) of the ensemble which is not a machine-learning-based calculation method (800, 900, 1000) comprises:
segmenting the time profile, occurring during an execution of the process, of a measurement variable dependent on the process profile and influencing the metric directly or indirectly, in such a way that each segment defines a time segment of this time profile within which the value of the measurement variable remains within a predetermined limited tolerance range around the starting value or mean value of the measurement variable, and a segment change to another segment occurs when the value leaves this limited value range;
determining the preliminary target process configuration parameters (PP1, ..., PP5) of the set of preliminary target process configuration parameters (PP1, ..., PP5) assigned to this calculation method (500, 600, 800, 900, 1000) such that the preliminary target process configuration parameters (PP1, ..., PP5) of the set are determined depending on those actual process configuration parameters in accordance with which the process was configured during that one of the segments in which the value of the measurement variable has optimized a defined optimization variable in cross-comparison among all segments.

11. Method (105; 300) according to Claim 10, wherein the optimization variable is or is defined as or depending on one of the following variables:
- average value of the measurement variable during the respective segment;
- average value of the measurement variable during a particular continuous or cumulative time period, lying in the respective segment, of a defined duration T which is the same for all segments, wherein the respective time period within a segment is selected such that it optimizes the measurement variable within the segment in cross-comparison among a plurality of possible time periods of the duration T within the segment;
- segment duration.

12. Method (105; 300) according to any one of the preceding claims, wherein the optimization method comprises at least one calculation method (500, 600) which is adapted to the process and in this case is based on machine learning, ML, in which calculation method an ML model is used which uses features from the input data as input and supplies a value for the metric as output.

13. Method (105; 300) according to Claim 12, wherein at least one of the following variables or at least one variable dependent thereon is determined for at least one of the parameters provided by means of the input data as process configuration parameters or state parameters for a defined time window which slides with time and is used by the ML model as feature:
- the sliding mean value of the respective actual values of the parameter whose associated points in time or time periods lie within the time window;
- an exponentially weighted sliding mean value of the respective actual values of the parameter whose associated points in time or time periods lie within the time window, wherein the weighting by means of an exponential function is carried out such that the actual values at younger points in time are weighted higher than the actual values of older points in time;
- the sliding mean value of the standard deviation of the distribution of the actual values of the parameter whose associated points in time or time periods lie within the time window;
- the number of changes in the actual value of the parameter within the time window;
- the maximum number of changes in the actual value of the parameter within the time window related to a defined time period;
- the cumulative absolute duration or relative duration, related to the duration of the time window, of those time periods during which, in accordance with the actual values of the parameter, the process was stopped or the plant had failed or had stood still;
- a numerical variable corresponding to a value of the parameter and characterizing this value if this parameter per se characterizes a non-numerical variable.

14. Method (105; 300) according to any one of the preceding claims, wherein the method is used for optimizing a variable parameterized process configuration of a technical plant for producing or processing products of at least one of the following product types:
- products comprising material made of paper, cardboard or paperboard;
- foils;
- foodstuffs;
- steel;
- tobacco;
- textiles;
- pharmaceuticals.

15. Plant control system (110) which is configured to configure or control a process for producing or processing products, which process can be carried out on a technical plant, in accordance with the method (105; 300) according to any one of the preceding claims in accordance with the optimized process configuration.

16. Computer program comprising instructions which cause a plant control system (110) according to Claim 15 to carry out the method (105; 300) according to any one of Claims 1 to 14.

## Revendications

1. Procédé (105; 300) de détermination automatisée d'une configuration de processus optimisée d'un processus de fabrication ou de transformation de produits, qui peut être mis en oeuvre au moyen d'une installation technique et qui peut être configuré au moyen d'un nombre M > 1 de différents paramètres de configuration de processus (SP1, ..., SP7), le procédé (105 ; 300) comprenant: l'acquisition de données de configuration de processus historiques (115, HPD) qui, pour une pluralité de différents instants ou périodes de temps actuels ou passés pendant au moins une exécution du processus, représentent la configuration de processus réelle du processus utilisé à chaque fois sur la base de valeurs réelles des paramètres de configuration de processus définissant cette configuration de processus respective;
l'acquisition de données d'état (120, SD) qui, pour chacun des instants ou périodes de temps actuels ou passés, représentent à chaque fois un état de fonctionnement réel associé respectif de l'installation au moyen de valeurs réelles respectives d'un nombre N > 1 de différents paramètres d'état (200) de l'installation;
l'acquisition de données de production (125, PD) qui représentent au moins une propriété cible, pouvant être influencée par le processus, des produits résultant du processus ou au moins une propriété réelle ou cible d'au moins un matériau de départ (A) ou produit de départ (A) utilisé à cet effet;
la détermination d'une configuration de processus du processus, qui est optimisée par rapport à une métrique définie et qui est définie par des valeurs cibles respectives des paramètres de configuration de processus, en utilisant un procédé d'optimisation adapté au processus et dans ce cas basé au moins en partie sur un apprentissage automatique, en utilisant des données d'entrée qui comprennent les données de production (125, PD) et des caractéristiques qui sont données par les données de configuration de processus historiques (115, HPD) et les données d'état (120, SD) ou qui en sont dérivées; et
la sortie de données de configuration de processus cibles qui représentent la configuration de processus optimisée déterminée au moyen des valeurs cibles des paramètres de configuration de processus;
le procédé (105; 300) comprenant en outre au moins l'une des étapes suivantes :
- le réglage automatique de l'installation avec les données de configuration de processus cibles sorties afin de configurer l'installation pour pouvoir mettre en oeuvre le processus selon la configuration de processus optimisée ;
- la commande automatique de l'installation pour mettre en oeuvre le processus selon la configuration de processus optimisée définie par les données de configuration de processus cibles sorties ; et
la métrique étant ou étant définie de telle sorte qu'elle quantifie l'un des objectifs d'optimisation suivants pour le processus ou une combinaison particulière de deux ou plus de ces objectifs d'optimisation :
- la réduction de la variabilité de processus du processus ;
- la réduction de la variabilité de produit des produits résultant de la performance du processus ;
- l'augmentation de l'efficacité et/ou de l'efficacité du processus, l'augmentation de l'efficacité et/ou de l'efficacité du processus indiquant l'une des variables suivantes ou une combinaison d'au moins deux de telles variables :
(i) un débit du processus ;
(ii) une disponibilité du processus ;
(iii) une quantité des produits fabriqués ou transformés ;
(iv) une qualité des produits fabriqués ou transformés.

2. Procédé (105; 300) selon la revendication 1, dans lequel les données d'entrée dépendent du temps et le procédé (105; 300) est mis en oeuvre de manière répétée pendant une exécution du processus afin de déterminer et de sortir dynamiquement des données de configuration de processus cibles sur la base des données d'entrée.

3. Procédé (105 ; 300) selon l'une quelconque des revendications précédentes, dans lequel la sortie des données de configuration de processus cibles comprend au moins l'une des étapes suivantes :
- la fourniture des données de configuration de processus cibles au niveau d'une interface de données de l'installation ;
- la transmission des données de configuration de processus cibles par le biais d'une liaison de communication à un récepteur de données distant ;
- la sortie ou le déclenchement d'une sortie des données de configuration de processus cibles sous forme lisible par l'homme au niveau d'une interface homme-machine.

4. Procédé (105; 300) selon l'une quelconque des revendications précédentes, dans lequel les paramètres d'état sont sélectionnés de telle sorte qu'ils représentent individuellement ou cumulativement un ou plusieurs des états de fonctionnement réels suivants de l'installation pour l'au moins un instant ou période de temps actuel ou précédent :
- taux de débit (V(t)) ou quantité, en particulier taux de débit minimal ou quantité, des produits fabriqués ou transformés, en particulier rapporté à l'ensemble de l'installation ou à l'ensemble du processus ou à une ou plusieurs sections d'installation ou sections de processus individuelles ;
- taux d'erreur, quantité d'erreur ou type d'erreur d'erreurs qui se sont produites pendant l'exécution du processus, en particulier selon des messages d'erreur ou d'alarme qui se sont produits ou des quantités ou quantités de produits défectueux du processus ;
- vitesse de fonctionnement respective, en particulier vitesse de fonctionnement maximale qui s'est produite, d'au moins une partie mobile de l'installation ;
- un ou plusieurs temps de perte de taux de débit ou instants ou périodes de temps auxquels ou pendant lesquels une performance réduite ou un arrêt, en particulier une défaillance, de l'installation s'est produit;
- des informations ou identifiants de raisons qui ont conduit à une performance réduite ou à un arrêt de l'installation ;
- instants, en particulier instants réels ou instants planifiés, pour le début ou une fin de l'opération de processus ;
- types de données ou formats de données des données d'entrée ou des données de sortie, en particulier pour représenter les paramètres de configuration de processus cibles.

5. Procédé (105; 300) selon l'une quelconque des revendications précédentes, dans lequel les données de production (125, PD) sont sélectionnées de telle sorte qu'elles représentent une ou plusieurs des propriétés cibles suivantes des produits à obtenir à partir du processus ou d'au moins un matériau de départ (A) ou produit de départ (A) utilisé à cet effet :
- sorte, type, qualité ou propriétés physiques ou chimiques sélectionnées des matériaux de départ (A) ou produits de départ (A) utilisés ;
- forme ou sorte de mise à disposition des matériaux de départ (A) ou produits de départ (A) utilisés ;
- sorte, type, qualité ou propriétés physiques ou chimiques cibles sélectionnées des produits à obtenir à partir du processus ;
- forme ou sorte de mise à disposition des produits à obtenir à partir du processus.

6. Procédé (105; 300) selon l'une quelconque des revendications précédentes, dans lequel le nombre M de paramètres de configuration de processus et le nombre N de paramètres d'état sont sélectionnés de telle sorte que N + M ≥ 10.

7. Procédé (105; 300) selon l'une quelconque des revendications précédentes, dans lequel le procédé d'optimisation comprend:
un calcul multiple d'une configuration de processus du processus, qui est optimisée par rapport à la métrique et dans ce cas est représentée au moyen d'un ensemble respectif de paramètres de configuration de processus cibles préliminaires (PP1, ..., PP5) à déterminer, dans lequel chaque calcul est mis en oeuvre au moyen d'un procédé de calcul respectif parmi un ensemble d'une pluralité de procédés de calcul mutuellement alternatifs (500, 600, 800, 900, 1000) et à chaque fois en utilisant des caractéristiques des données d'entrée, dans lequel au moins l'un des procédés de calcul (500, 600) de l'ensemble est adapté au processus en utilisant un apprentissage automatique; et
la définition des paramètres de configuration de processus cibles (130, CL) sur la base d'un ensemble sélectionné parmi l'ensemble d'ensembles de paramètres de configuration de processus cibles préliminaires (PP1, ..., PP5), dans lequel cette sélection est mise en oeuvre de telle sorte que l'ensemble sélectionné réponde le mieux à un critère d'évaluation prédéterminé parmi tous les ensembles pour les ensembles.

8. Procédé (105; 300) selon la revendication 7, dans lequel :
le critère d'évaluation est ou est défini en fonction de
- pour quel ensemble des paramètres de configuration de processus cibles préliminaires (PP1, ..., PP5) la métrique a été satisfaite le mieux ; ou
- pour quel nombre de paramètres de configuration de processus de l'ensemble il s'applique que leur valeur respective se produit le plus fréquemment dans une comparaison croisée en utilisant une mesure de similarité à l'intérieur de l'ensemble des valeurs respectives pour ce paramètre de configuration de processus parmi tous les ensembles de paramètres de configuration de processus cibles préliminaires (PP1, ..., PP5), dans lequel chaque ensemble de paramètres de configuration de processus répond au critère d'évaluation plus ce nombre est élevé pour cet ensemble.

9. Procédé (105 ; 300) selon la revendication 7 ou 8, dans lequel au moins l'un des procédés de calcul (500, 600, 800, 900, 1000) de l'ensemble n'est pas un procédé de calcul basé sur un apprentissage machine (800, 900, 1000).

10. Procédé (105; 300) selon la revendication 9, dans lequel au moins l'un des procédés de calcul (800, 900, 1000) l'ensemble qui n'est pas un procédé de calcul basé sur un apprentissage machine (800, 900, 1000) :
la segmentation du profil temporel, se produisant pendant une exécution du processus, d'une grandeur de mesure dépendant du profil de processus et influençant directement ou indirectement la métrique, de telle sorte que chaque segment définit un segment temporel de ce profil temporel à l'intérieur duquel la valeur de la grandeur de mesure reste à l'intérieur d'une plage de tolérance limitée prédéterminée autour de la valeur de départ ou valeur moyenne de la grandeur de mesure, et un changement de segment vers un autre segment se produit lorsque la valeur quitte cette plage de valeur limitée ;
la détermination des paramètres de configuration de processus cibles préliminaires (PP1, ..., PP5) de l'ensemble de paramètres de configuration de processus cibles préliminaires (PP1, ..., PP5) associés à ce procédé de calcul (500, 600, 800, 900, 1000) de telle sorte que les paramètres de configuration de processus cibles préliminaires (PP1, ..., PP5) de l'ensemble sont déterminés en fonction des paramètres de configuration de processus réels selon lesquels le processus a été configuré pendant celui des segments dans lequel la valeur de la grandeur de mesure a optimisé une grandeur d'optimisation définie dans une comparaison croisée parmi tous les segments.

11. Procédé (105; 300) selon la revendication 10, dans lequel la grandeur d'optimisation est ou est définie comme ou en fonction de l'une des variables suivantes:
- valeur moyenne de la grandeur de mesure pendant le segment respectif ;
- valeur moyenne de la grandeur de mesure pendant une période de temps continue ou cumulative respective, située dans le segment respectif, d'une durée T définie qui est la même pour tous les segments, la période de temps respective à l'intérieur d'un segment étant sélectionnée de telle sorte qu'elle optimise la grandeur de mesure à l'intérieur du segment dans une comparaison croisée parmi une pluralité de périodes de temps possibles de la durée T à l'intérieur du segment ;
- durée de segment.

12. Procédé (105; 300) selon l'une quelconque des revendications précédentes, dans lequel le procédé d'optimisation comprend au moins un procédé de calcul (500, 600) adapté au processus et dans ce cas basé sur un apprentissage automatique, **ML,** dans lequel procédé de calcul un modèle **ML** est utilisé, qui utilise des caractéristiques des données d'entrée en tant qu'entrée et fournit une valeur pour la métrique en tant que sortie.

13. Procédé (105; 300) selon la revendication 12, dans lequel au moins l'une des variables suivantes ou au moins une variable dépendante de celles-ci est déterminée pour au moins l'un des paramètres fournis au moyen des données d'entrée en tant que paramètres de configuration de processus ou paramètres d'état pour une fenêtre de temps définie qui glisse avec le temps et qui est utilisée par le modèle ML en tant que caractéristique:
- la valeur moyenne glissante des valeurs réelles respectives du paramètre dont les instants ou périodes de temps associés se situent à l'intérieur de la fenêtre de temps;
- une valeur moyenne glissante pondérée de manière exponentielle des valeurs réelles respectives du paramètre dont les instants ou périodes de temps associés se situent à l'intérieur de la fenêtre de temps, dans lequel la pondération au moyen d'une fonction exponentielle est mise en oeuvre de telle sorte que les valeurs réelles à des instants plus jeunes sont pondérées plus fortement que les valeurs réelles d'instants plus anciens;
- la valeur moyenne glissante de l'écart-type de la distribution des valeurs réelles du paramètre dont les instants ou périodes de temps associés se situent à l'intérieur de la fenêtre de temps;
- le nombre de modifications de la valeur réelle du paramètre à l'intérieur de la fenêtre de temps;
- le nombre maximal de modifications de la valeur réelle du paramètre à l'intérieur de la fenêtre de temps par rapport à une période de temps définie ;
- la durée absolue cumulative ou la durée relative, par rapport à la durée de la fenêtre de temps, des périodes de temps pendant lesquelles, selon les valeurs réelles du paramètre, le processus a été arrêté ou l'installation a échoué ou s'est arrêtée;
- une grandeur numérique correspondant à une valeur du paramètre et caractérisant cette valeur si ce paramètre en soi caractérise une grandeur non numérique.

14. Procédé (105; 300) selon l'une quelconque des revendications précédentes, dans lequel le procédé est utilisé pour optimiser une configuration de processus paramétrée par grandeur d'une installation technique de fabrication ou de transformation de produits d'au moins l'un des types de produits suivants :
- produits comprenant un matériau en papier, carton ou papier cartonné ;
- feuilles;
- alimentaires;
- acier;
- tabac;
- textiles;
- pharmaceutiques.

15. Système de commande d'installation (110) qui est configuré pour configurer ou commander un processus de fabrication ou de transformation de produits, qui peut être mis en oeuvre au niveau d'une installation technique, selon le procédé (105; 300) selon l'une quelconque des revendications précédentes selon la configuration de processus optimisée.

16. Programme informatique comprenant des instructions qui amènent un système de commande d'installation (110) selon la revendication 15 à mettre en oeuvre le procédé (105; 300) selon l'une quelconque des revendications 1 à 14.
